(19) Europäisches Patentamt
European Patent Office
Office européen des brevets

(11) **EP 4 358 446 A1**

(12) **EUROPEAN PATENT APPLICATION**
published in accordance with Art. 153(4) EPC

(43) Date of publication:
**24.04.2024 Bulletin 2024/17**

(21) Application number: **22836925.2**

(22) Date of filing: **05.07.2022**

(51) International Patent Classification (IPC):
*H04L 1/00* (2006.01)          *G06N 3/08* (2023.01)
*G06N 3/04* (2023.01)          *H04W 24/08* (2009.01)

(52) Cooperative Patent Classification (CPC):
**G06N 3/04; G06N 3/08; H04L 1/00; H04W 24/08**

(86) International application number:
**PCT/CN2022/103985**

(87) International publication number:
**WO 2023/280176 (12.01.2023 Gazette 2023/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.07.2021 CN 202110780949**

(71) Applicant: **Huawei Technologies Co., Ltd.
Shenzhen, Guangdong 518129 (CN)**

(72) Inventors:
• **HU, Bin
Shenzhen, Guangdong 518129 (CN)**
• **WANG, Jian
Shenzhen, Guangdong 518129 (CN)**
• **XU, Chen
Shenzhen, Guangdong 518129 (CN)**
• **ZHANG, Gongzheng
Shenzhen, Guangdong 518129 (CN)**
• **LI, Rong
Shenzhen, Guangdong 518129 (CN)**

(74) Representative: **Thun, Clemens
Mitscherlich PartmbB
Patent- und Rechtsanwälte
Karlstraße 7
80333 München (DE)**

(54) **MODEL TRAINING METHOD AND RELATED APPARATUS**

(57)    This application provides a model training method and a related apparatus, to help improve a convergence speed of model training and improve end-to-end communication quality. The method includes: The first communication apparatus sends first data to a second communication apparatus through a channel, where the first data is an output result of the first machine learning model. The second communication apparatus receives second data through a channel, and inputs the second data into a second machine learning model, to obtain third data; determines a first loss function based on the third data and the first training data; and sends the first loss function to the first communication apparatus through a feedback channel. The first communication apparatus receives a second loss function through a feedback channel, and updates a parameter of a control layer based on Kalman filtering and according to the second loss function, to obtain an updated parameter of the control layer, where the updated parameter of the control layer is used to update a parameter of the first machine learning model.

FIG. 3

**Description**

This application claims priority to Chinese Patent Application No. 202110780949.8, filed with the China National Intellectual Property Administration on July 9, 2021 and entitled "MODEL TRAINING METHOD AND RELATED APPARATUS", which is incorporated herein by reference in its entirety.

**TECHNICAL FIELD**

This application relates to the communication field, and in particular, to a model training method and a related apparatus.

**BACKGROUND**

In a conventional end-to-end communication system, a communication signal processing process is generally divided into a series of submodules, for example, source encoding, channel encoding, modulation, and channel estimation. If end-to-end communication is optimized, each submodule needs to be optimized separately. However, this method introduces many interference effects, such as amplifier distortion and channel damage, and each module has a control factor and a quantity of parameters. This enables end-to-end optimization to be very complex.

With development of a deep learning technology, in an end-to-end communication system, a transmitting end and a receiving end each can process a communication signal by using a machine learning model such as an autoencoder (autoencoder). In the communication system, when an optimization degree of the autoencoder is high, end-to-end communication quality can be improved. However, a signal sent by the transmitting end needs to pass through a channel before reaching the receiving end, and the channel causes interference to the communication signal. This increases difficulty in autoencoder training.

Currently, it is difficult to use a model to represent the interference caused to the communication signal that passes through the channel. This increases the difficulty in the autoencoder training, and affects the end-to-end communication quality.

**SUMMARY**

This application provides a model training method and a related apparatus, to help, when no channel modeling is performed, improve feasibility of training a machine learning model, improve a training convergence speed, and optimize robustness of the machine learning model. In this way, end-to-end communication quality is improved.

According to a first aspect, this application provides a model training method, which may be applied to a communication system including a first communication apparatus and a second communication apparatus, where there is at least one first communication apparatus, a first machine learning model is deployed in the first communication apparatus, and the method includes: The first communication apparatus sends first data to the second communication apparatus through a channel, where the first data is an output result obtained by inputting first training data into the first machine learning model, the first machine learning model includes a control layer, and the control layer is at least one layer of the first machine learning model. The first communication apparatus receives a second loss function through a feedback channel, where the feedback channel is determined based on an observation error, and the second loss function is obtained by transmitting, through the feedback channel, the first loss function sent by the second communication apparatus. The first communication apparatus updates a parameter of the control layer based on Kalman filtering and according to the second loss function, to obtain an updated parameter of the control layer, where the updated parameter of the control layer is used to update a parameter of the first machine learning model.

It should be understood that, in a possible implementation, the control layer is a last layer of the first machine learning model.

It should be further understood that the control layer is at least one layer of network selected in the first machine learning model in embodiments of this application, the control layer is merely an example of a name, and all other names having a same characteristic may be included in the protection scope of embodiments of this application.

The second loss function may be a cross entropy, a minimum mean square error, or the like. A type of the Kalman filtering may be cubature Kalman filtering, extended Kalman filtering, or the like. The type of the Kalman filtering is not limited in embodiments of this application.

According to the model training method provided in this embodiment of this application, when no channel modeling is performed, the first communication apparatus may receive the second loss function through the channel controlled by power, so that the first communication apparatus may update the parameter of the control layer of the first machine learning model based on the Kalman filtering. When there is a channel error, model training accuracy can still be ensured. Impact of the channel error on model training is reduced, feasibility of machine learning model training for end-to-end communication is improved, a convergence speed of the machine learning model training is improved, and robustness of the machine learning model is optimized. In this way, end-to-end communication quality is improved.

With reference to the first aspect, in a possible implementation, the updating a parameter of the control layer based on Kalman filtering, to obtain an updated parameter of the control layer includes: The first communication apparatus obtains a Kalman gain based on a prior parameter of the control layer, the second loss function, and an error covariance of the second loss function. The first communication apparatus updates the parameter of the control layer based on the Kalman gain, to obtain the updated parameter of the control layer.

The prior parameter of the control layer may be an initial parameter of the control layer. When the initial parameter of the control layer changes, the prior parameter of the control layer may be a changed parameter of the control layer. It should be understood that the prior parameter of the control layer may change according to the updated parameter of the control layer.

According to the model training method provided in this embodiment of this application, the Kalman gain is calculated to update the parameter of the control layer, so that impact of the channel error on the update of the parameter of the control layer can be reduced, and accuracy of updating the parameter of the control layer can be improved.

With reference to the first aspect, in a possible implementation, the method further includes: The first communication apparatus updates a parameter of a first network layer in the first machine learning model based on the updated parameter of the control layer and the Kalman gain, to obtain an updated parameter of the first network layer, where the first network layer includes a network layer before the control layer. The first communication apparatus obtains the updated first machine learning model based on the updated parameter of the control layer and the updated parameter of the first network layer.

It should be understood that the first communication apparatus may extract a feature of first-time training data by updating the parameters of the control layer and the first network layer, to better implement functions of source encoding, channel encoding, and modulation.

According to the model training method provided in this embodiment of this application, updating the parameters of the control layer and the first network layer helps extract a relationship between training data, and updating the parameter of the first machine learning model based on the Kalman gain and the parameter of the control layer can reduce calculation complexity of the parameter update.

With reference to the first aspect, in a possible implementation, after the obtaining the updated first machine learning model, the method further includes: The first communication apparatus sends fourth data to the second communication apparatus through the channel, where the fourth data is an output result obtained by inputting second training data into the first machine learning model. The first communication apparatus receives indication information from the second communication apparatus, where the indication information indicates the first communication apparatus to stop training of the first machine learning model. The first communication apparatus stops the training of the first machine learning model based on the indication information.

Optionally, after determining a third loss function, the second communication apparatus may alternatively send the third loss function to the first communication apparatus through a channel, and the first communication apparatus determines whether the third loss function is less than a preset threshold. If the third loss function is less than the preset threshold, the first communication apparatus stops training of the first machine learning model, and sends indication information to the second communication apparatus. The indication information indicates the second communication apparatus to stop training of the second machine learning model.

Optionally, after the second communication apparatus determines a third loss function, if the third loss function is less than a preset threshold, the second communication apparatus stops sending the third loss function to the first communication apparatus. If not receiving the third loss function within a period of time, the second communication apparatus stops training of the first machine learning model.

According to the model training method provided in this embodiment of this application, in a process of repeatedly updating the parameter of the first machine learning model, when it is detected that the third loss function meets the preset threshold, the update of the parameter of the first machine learning model may be stopped. This helps reduce unnecessary training, save an operation resource, and reduce power consumption of the first communication apparatus.

With reference to the first aspect, in a possible implementation, the first data includes N groups of data, where N is a positive integer, and a value of N is determined based on a type of the Kalman filtering and a dimension of the parameter of the control layer.

The first communication apparatus may sample the parameter of the control layer, to obtain a sampling point of the parameter of the control layer. A quantity of samples may be determined based on the type of the Kalman filtering and the dimension of the parameter of the control layer.

With reference to the first aspect, in a possible implementation, the first data includes M groups of data, where M is a positive integer, a value of M is determined by the first communication apparatus and another first communication apparatus according to a preset rule, and a sum of M and a quantity of pieces of data sent by the another first communication apparatus is determined based on a type of the Kalman filtering and a dimension of the parameter of the control layer.

In a device-to-device communication system, there may be a plurality of first communication apparatuses, and there may be one second communication apparatus. In the communication system, the first communication apparatus and another first communication apparatus may determine a quantity M of the first data according to the preset rule. The preset rule may be that in the communication system, a quantity of output results of a machine learning model in each first communication apparatus is greater than or equal to 1, and a sum of quantities of output results of machine learning models in all first communication apparatuses is determined by the type of the Kalman filtering and the dimension of the parameter of the control layer.

All the first communication apparatuses in the communication system may determine their own sampling points by communicating with each other.

It should be understood that the first communication apparatus sends first data to the second communication apparatus through a channel. The first data may include M groups of data. If the sum of the quantities of output results of the machine learning models in all the first communication apparatuses is P, the first communication apparatus receives P second loss functions through a channel. The first communication apparatus updates the parameter of the control layer based on the P second loss functions, to obtain the updated parameter of the control layer. The first communication apparatus may transmit the updated parameter of the control layer to the another first communication apparatus in a manner of mutual communication.

It should be understood that a plurality of first communication apparatuses in the communication system use a central distributed training method to divide sampling at the control layer into a plurality of subtasks, and the plurality of first communication apparatuses jointly complete the subtasks. The foregoing first communication apparatus may be used as a central communication apparatus, and may receive the second loss function sent by the second communication apparatus, perform training to obtain the parameter of the control layer, and then deliver the parameter to another first communication apparatus.

According to the model training method provided in this embodiment of this application, the sampling at the control layer is divided into the plurality of subtasks, and the plurality of first communication apparatuses jointly complete the subtasks, so that an operation amount of the first communication apparatus can be reduced, thereby reducing operation load of the first communication apparatus, and ensuring deployment and implementation of online training.

With reference to the first aspect, in a possible implementation, the method further includes: The first communication apparatus sends the updated parameter of the control layer to the another first communication apparatus.

Optionally, after the first communication apparatus updates the parameter of the first machine learning model, the first communication apparatus may further transmit an updated parameter of the first machine learning model to another first communication apparatus in a manner of mutual communication.

Optionally, after the first communication apparatus determines the Kalman gain, the first communication apparatus may further transmit the updated parameter of the control layer and the Kalman gain to another first communication apparatus in a manner of mutual communication. The another first communication apparatus may update the parameter of the first network layer in the first machine learning model based on the updated parameter of the control layer and the Kalman gain that are received and based on the reverse gradient propagation, to update the parameter of the first machine learning model.

Optionally, the first communication apparatus may transmit the prior parameter of the control layer, the second loss function, the error covariance of the second loss function, and the updated parameter of the control layer to the another first communication apparatus in a manner of mutual communication. The another first communication apparatus may first determine the Kalman gain based on the prior parameter of the control layer, the second loss function, and the error covariance of the second loss function that are received, and then updates the parameter of the first network layer in the first machine learning model based on the updated parameter of the control layer and the Kalman gain and based on the reverse gradient propagation, to update the parameter of the first machine learning model.

According to the model training method provided in this embodiment of this application, the central distributed training method is used. After completing training, the central first communication apparatus may send an updated model parameter to another first communication apparatus. This reduces training costs of the another first communication apparatus, and reduces a calculation amount of the another first communication apparatus.

With reference to the first aspect, in a possible implementation, after the first communication apparatus receives the second loss function through the channel, the method further includes: The first communication apparatus determines a non-linearity degree of the channel in a first time period based on a variance of a plurality of loss functions received in the first time period, where the plurality of loss functions include the second loss function. The first communication apparatus determines the type of the Kalman filtering based on the non-linearity degree of the channel in the first time period.

Channels are different in different environments, and the first communication apparatus may determine the type of the Kalman filtering by determining the non-linearity degree of the channel in the first time period.

According to the model training method provided in this embodiment of this application, impact of an environment on the channel may be determined based on the non-linear degree in the first time period, and the impact of the environment on the channel is reduced by changing the type of the Kalman filtering, so that complexity and precision of updating the first machine learning model are balanced.

With reference to the first aspect, in a possible implementation, a variance of the second loss function is greater than or equal to a first threshold, and the non-linearity degree of the channel in the first time period is strong non-linearity; or a variance of the second loss function is less than a first threshold, and the non-linearity degree of the channel in the first time period is weak non-linearity.

With reference to the first aspect, in a possible implementation, the non-linearity degree of the channel in the first time period is strong non-linearity, and the type of the Kalman filtering is cubature Kalman filtering; or the non-linearity degree of the channel in the first time period is weak non-linearity, and the type of the Kalman filtering is extended Kalman filtering.

According to a second aspect, this application provides a model training method, which may be applied to a communication system including a first communication apparatus and a second communication apparatus, where there is at least one first communication apparatus, a first machine learning model is deployed in the first communication apparatus, a second machine learning model is deployed in the second communication apparatus, and the method includes: The second communication apparatus receives second data through a channel, where the second data is obtained by transmitting, through the channel, first data sent by the first communication apparatus, the first data is an output result obtained by inputting first training data into the first machine learning model, the first machine learning model includes a control layer, and the control layer is at least one layer of the first machine learning model. The second communication apparatus inputs the second data into the second machine learning model, to obtain third data. The second communication apparatus determines a first loss function based on the third data and the first training data. The second communication apparatus sends the first loss function to the first communication apparatus through a feedback channel, where the feedback channel is determined based on an observation error, and the first loss function is used to update a parameter of the control layer of the first machine learning model.

According to the model training method provided in this embodiment of this application, when no channel modeling is performed, the second communication apparatus may determine the observation error based on an error between a predicted value and a real value in a period of time, and construct the feedback channel whose variance is the observation error, so that the first communication apparatus may update a parameter of the first machine learning model based on Kalman filtering. This can reduce impact of a channel error on model training, improve feasibility of the model training, improve a convergence speed of training an autoencoder, and optimize robustness of the autoencoder. In this way, end-to-end communication quality is improved.

With reference to the second aspect, in a possible implementation, the method further includes: The second communication apparatus updates a parameter of the second machine learning model based on reverse gradient propagation and according to the first loss function, to obtain the updated second machine learning model.

With reference to the second aspect, in a possible implementation, the method further includes: The second communication apparatus receives fifth data through a channel, where the fifth data is obtained by transmitting, through the channel, fourth data sent by the first communication apparatus, and the fourth data is an output result obtained by inputting second training data into the first machine learning model. The second communication apparatus inputs the fifth data into the second machine learning model, to obtain sixth data. The second communication apparatus determines a third loss function based on the sixth data and the second training data. If the third loss function is less than a preset threshold, the second communication apparatus sends indication information to the first communication apparatus, where the indication information indicates the first communication apparatus to stop training of the first machine learning model.

According to the model training method provided in this embodiment of this application, in a process of repeatedly updating the parameter of the first machine learning model, when it is detected that the third loss function meets the preset threshold, the update of the parameter of the first machine learning model may be stopped. This helps reduce unnecessary training, save an operation resource, and reduce power consumption of the first communication apparatus.

According to a third aspect, this application provides a model training related apparatus. The apparatus may be used in the first communication apparatus in the first aspect. The apparatus may be a terminal device or a network device, or may be an apparatus (for example, a chip, a chip system, or a circuit) in a terminal device or a network device, or may be an apparatus that can be used in a matching manner with a terminal device or a network device.

In a possible implementation, the communication apparatus may include modules or units that are in one-to-one correspondence with the methods/operations/steps/actions described in the first aspect. The modules or units may be implemented by a hardware circuit, software, or a combination of a hardware circuit and software.

In a possible design, the apparatus includes a transceiver unit and a processing unit. The transceiver unit is configured to: send first data to a second communication apparatus through a channel, where the first data is an output result obtained by inputting first training data into a first machine learning model, the first machine learning model includes a control layer, and the control layer is at least one layer of the first machine learning model; and receive a second loss function through a channel, where the second loss function is obtained by transmitting, through the channel, a first loss function sent by the second communication apparatus. The processing unit is configured to update a parameter of the control layer based on Kalman filtering and according to the second loss function, to obtain an updated parameter of the control layer, where the updated parameter of the control layer is used to update a parameter of the first machine learning model.

With reference to the third aspect, in a possible implementation, the processing unit is further configured to: obtain a Kalman gain based on a prior parameter of the control layer, the second loss function, and an error covariance of the second loss function; and update the parameter of the control layer based on the Kalman gain, to obtain the updated parameter of the control layer.

With reference to the third aspect, in a possible implementation, the transceiver unit is further configured to: send fourth data to the second communication apparatus through the channel, where the fourth data is an output result obtained by inputting second training data into the first machine learning model; and receive indication information from the second communication apparatus, where the indication information indicates the apparatus to stop training of the first machine learning model. The processing unit is further configured to stop the training of the first machine learning model based on the indication information.

With reference to the third aspect, in a possible implementation, the first data includes N groups of data, where N is a positive integer, and a value of N is determined based on a type of the Kalman filtering and a dimension of the parameter of the control layer.

With reference to the third aspect, in a possible implementation, the first data includes M groups of data, where M is a positive integer, a value of M is determined by the apparatus and another first communication apparatus according to a preset rule, and a sum of M and a quantity of pieces of data sent by the another first communication apparatus is determined based on a type of the Kalman filtering and a dimension of the parameter of the control layer.

With reference to the third aspect, in a possible implementation, the transceiver unit is further configured to: send, by the first communication apparatus, the updated parameter of the control layer to the another first communication apparatus.

With reference to the third aspect, in a possible implementation, the processing unit is further configured to: determine a non-linearity degree of the channel in a first time period based on a variance of a plurality of loss functions received in the first time period, where the plurality of loss functions include the first loss function; and determine the type of the Kalman filtering based on the non-linearity degree of the channel in the first time period.

With reference to the third aspect, in a possible implementation, a variance of the second loss function is greater than or equal to a first threshold, and the non-linearity degree of the channel in the first time period is strong non-linearity; or a variance of the second loss function is less than a first threshold, and the non-linearity degree of the channel in the first time period is weak non-linearity.

With reference to the third aspect, in a possible implementation, the non-linearity degree of the channel in the first time period is strong non-linearity, and the type of the Kalman filtering is cubature Kalman filtering; or the non-linearity degree of the channel in the first time period is weak non-linearity, and the type of the Kalman filtering is extended Kalman filtering.

For beneficial effects of the possible implementations of the third aspect, refer to the first aspect. Details are not described herein again.

According to a fourth aspect, this application provides a model training related apparatus. The apparatus may be used in the second communication apparatus in the second aspect. The apparatus may be a terminal device or a network device, or may be an apparatus (for example, a chip, a chip system, or a circuit) in a terminal device or a network device, or may be an apparatus that can be used in a matching manner with a terminal device or a network device.

In a possible implementation, the communication apparatus may include modules or units that are in one-to-one correspondence with the methods/operations/steps/actions described in the second aspect. The modules or units may be implemented by a hardware circuit, software, or a combination of a hardware circuit and software.

In a possible design, the apparatus includes a transceiver unit and a processing unit. The transceiver unit is configured to: receive second data through a channel, where the second data is obtained by transmitting, through the channel, first data sent by the first communication apparatus, the first data is an output result obtained by inputting first training data into the first machine learning model, the first machine learning model includes a control layer, and the control layer is at least one layer of the first machine learning model. The processing unit is configured to: input the second data into a second machine learning model, to obtain third data; and determine a first loss function based on the third data and the first training data. The transceiver unit is further configured to send the first loss function to the first communication apparatus through a feedback channel, where the feedback channel is determined based on an observation error, and the first loss function is used to update a parameter of the control layer of the first machine learning model.

With reference to the fourth aspect, in a possible implementation, the processing unit is further configured to update a parameter of the second machine learning model based on reverse gradient propagation and according to the first loss function, to obtain the updated second machine learning model.

With reference to the fourth aspect, in a possible implementation, the transceiver unit is further configured to: receive fifth data through a channel, where the fifth data is obtained by transmitting, through the channel, fourth data sent by the first communication apparatus, and the fourth data is an output result obtained by inputting second training data into the first machine learning model. The processing unit is configured to: input the fifth data into the second machine learning model, to obtain sixth data; and determine a third loss function based on the sixth data and the second training data. The transceiver unit is further configured to: if the third loss function is less than a preset threshold, send indication information to the first communication apparatus, where the indication information indicates the first communication apparatus to stop training of the first machine learning model.

For beneficial effects of the possible implementations of the third aspect, refer to the second aspect. Details are not described herein again.

According to a fifth aspect, this application provides another model training related apparatus, including a processor. The processor is coupled to a memory, and may be configured to execute instructions in the memory, to implement the method according to any possible implementation in the foregoing aspects. Optionally, the apparatus further includes the memory. Optionally, the apparatus further includes a communication interface, and the processor is coupled to the communication interface, to communicate with another communication apparatus.

According to a sixteenth aspect, this application provides a processing apparatus, including a processor and a memory. The processor is configured to: read instructions stored in the memory, receive a signal through a receiver, and transmit a signal through a transmitter, to perform the method according to any possible implementation in the foregoing aspects.

Optionally, there are one or more processors, and there are one or more memories.

Optionally, the memory and the processor may be integrated together, or the memory and the processor may be separately disposed.

In a specific implementation process, the memory and the processor may be integrated into one chip, or may be disposed separately on different chips. A type of the memory and a manner in which the memory and the processor are disposed are not limited in this application.

A related data exchange process, for example, sending first data, may be a process of outputting the first data from the processor, and receiving second data may be a process of receiving and inputting the second data by the processor. Specifically, data output by the processor may be output to the transmitter, and input data received by the processor may be from the receiver. The transmitter and the receiver may be collectively referred to as a transceiver.

The processing apparatus in the foregoing sixth aspect may be a chip, and the processor may be implemented by hardware or software. When the processor is implemented by the hardware, the processor may be a logic circuit, an integrated circuit, or the like. When the processor is implemented by the software, the processor may be a general-purpose processor, and the processor is implemented by reading software code stored in the memory. The memory may be integrated into the processor or may be located outside the processor and exist independently.

According to a seventh aspect, this application provides a computer program product. The computer program product includes a computer program (which may also be referred to as code or instructions). When the computer program is run, a computer is enabled to perform the method according to any possible implementation in the foregoing aspects.

According to an eighth aspect, this application provides a computer-readable storage medium. The computer-readable storage medium stores a computer program (which may also be referred to as code or instructions). When the computer program is run on a computer, the computer is enabled to perform the method according to any possible implementation in the foregoing aspects.

According to a ninth aspect, this application provides a computer program. When the computer program is run on a computer, the method according to the possible implementations in the foregoing aspects is performed.

According to a tenth aspect, this application provides a communication system, including the apparatus according to the third aspect and the possible implementations of the third aspect and the apparatus according to the fourth aspect and the possible implementations of the fourth aspect.

**BRIEF DESCRIPTION OF DRAWINGS**

FIG. 1 is a schematic diagram of an end-to-end signal transmission process;
FIG. 2 is a schematic diagram of an end-to-end signal transmission process that is based on an autoencoder;
FIG. 3 is a schematic flowchart of a model training method according to an embodiment of this application;
FIG. 4 is a schematic diagram of an end-to-end signal transmission process according to an embodiment of this application;

FIG. 5 is a schematic flowchart of another model training method according to an embodiment of this application;

FIG. 6 is a schematic diagram of updating a parameter of a first network layer according to an embodiment of this application;

FIG. 7 is a schematic diagram of cross entropy losses that are based on a model training method according to an embodiment of this application;

FIG. 8 is a schematic diagram of bit error rate changes that are based on a model training method according to an embodiment of this application;

FIG. 9 is a schematic flowchart of another model training method according to an embodiment of this application;

FIG. 10 is a schematic block diagram of a model training related apparatus according to an embodiment of this application; and

FIG. 11 is a schematic block diagram of another model training related apparatus according to an embodiment of this application.

## DESCRIPTION OF EMBODIMENTS

The following describes technical solutions of this application with reference to accompanying drawings.

The technical solutions in embodiments of this application may be applied to various communication systems, for example, a narrowband internet of things (narrowband internet of things, NB-IoT) system, a long term evolution (long term evolution, LTE) system, an LTE frequency division duplex (frequency division duplex, FDD) system, an LTE time division duplex (time division duplex, TDD) system, a 5th generation (5th generation, 5G) mobile communication system such as a new radio (new radio, NR) system, or another evolved communication system. The 5G system usually includes the following three major application scenarios: enhanced mobile broadband (enhanced mobile broadband, eMBB), ultra-reliable and low-latency communications (ultra-reliable and low-latency communications, URLLC), and massive machine-type communications (massive machine type of communication, mMTC).

A communication device in embodiments of this application may be a network device or a terminal device. It should be understood that the terminal device may be replaced with an apparatus or a chip that can implement a function similar to that of the terminal device, or the network device may be replaced with an apparatus or a chip that can implement a function similar to that of the network device. A name thereof is not limited in embodiments of this application.

The terminal device in embodiments of this application may also be referred to as user equipment (user equipment, UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user apparatus, or the like.

The terminal device may be a device that provides voice/data connectivity for a user, for example, a handheld device or a vehicle-mounted device that has a wireless connection function. Currently, some terminal devices are, for example, a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device that has a wireless communication function or another processing device connected to a wireless modem, a vehicle-mounted device, a wearable device, a terminal device in a 5G network, and a terminal device in a future evolved public land mobile network (public land mobile network, PLMN). This is not limited in embodiments of this application.

In addition, in embodiments of this application, the terminal device may alternatively be a terminal device in an internet of things (internet of things, IoT) system. The IoT is an important part of future development of information technologies. A main technical feature of the IoT is connecting things to a network by using a communication technology, to implement an intelligent network for human-machine interconnection and thing-thing interconnection.

In addition, the network device in embodiments of this application may be a device that provides a wireless communication function for the terminal device. The network device may also be referred to as an access network device or a radio access network device, and may be a transmission reception point (transmission reception point, TRP), or may be an evolved NodeB (evolved NodeB, eNB or eNodeB) in an LTE system, or may be a home NodeB (for example, home evolved NodeB, or home NodeB, HNB), a baseband unit (base-band unit, BBU), or a wireless controller in a cloud radio access network (cloud radio access network, CRAN) scenario. Alternatively, the network device may be a relay station, an access point, a vehicle-mounted device, a wearable device, a network device in a 5G network, a network device in a future evolved PLMN network, or the like, may be an access point (access point, AP) in a wireless local area network (Wireless Local Area Network, WLAN), may be a gNB in a new radio (new radio, NR) system, may be a satellite base station or the like in a satellite communication system, or may be a device or the like that undertakes a base station function in device-to-device (Device-to-Device, D2D), vehicle-to-everything (vehicle-to-everything, V2X), or machine-to-machine (machine-to-machine, M2M) communication. This is not limited in embodiments of this application.

In a network structure, the network device may include a central unit (central unit, CU) node or a distributed unit (distributed unit, DU) node, or include radio access network (radio access network, RAN) devices in a CU node and a DU node, or include RAN devices in a control plane CU node (CU-CP node), a user plane CU node (CU-UP node), and a DU node.

The network device serves a terminal device in a cell, and the terminal device communicates with the network device or another device corresponding to the cell by using a transmission resource (for example, a frequency domain resource, or a spectrum resource) allocated by the network device. The network device may be a macro base station (for example, a macro eNB or a macro gNB), or may be a base station corresponding to a small cell (small cell). The small cell herein may include a metro cell (metro cell), a micro cell (micro cell), a pico cell (pico cell), a femto cell (femto cell), and the like. These small cells have characteristics of small coverage and low transmit power, and are applicable to providing a high-rate data transmission service.

A specific structure of an execution body of a method provided in embodiments of this application is not specifically limited in embodiments of this application provided that a program that records code for the method provided in embodiments of this application can be run to perform communication according to the method provided in embodiments of this application. For example, the execution body of the method provided in embodiments of this application may be a terminal device, a network device, or a functional module that can invoke and execute a program in a terminal device or a network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a wireless channel, and various media that can store, contain and/or carry instructions and/or data.

In a conventional end-to-end communication system, a communication signal processing process is generally divided into a series of submodules, for example, source encoding, channel encoding, modulation, and channel estimation. To improve end-to-end communication quality, each submodule needs to be optimized separately. In each submodule, modeling is performed based on a specific signal processing algorithm, and is usually approximated to some simplified linear models. However, this manner of separately optimizing each submodule cannot ensure that end-to-end optimization is implemented in the entire communication system. On the contrary, more interference effects, such as amplifier distortion and channel damage, are introduced. In addition, each module has a control factor and a quantity of parameters. As a result, complexity of performing end-to-end optimization by using this conventional method is very high.

It should be understood that, in the conventional end-to-end communication system, the communication apparatus may be a terminal device or a network device. If a transmitting end in the communication system is a terminal device, a receiving end may be a network device or another terminal device. Alternatively, if a transmitting end in the communication system is a network device, a receiving end may be a terminal device or another network device. In other words, embodiments of this application may be applied to an end-to-end communication system in a plurality of scenarios such as between network devices, between a network device and a terminal device, and between terminal devices.

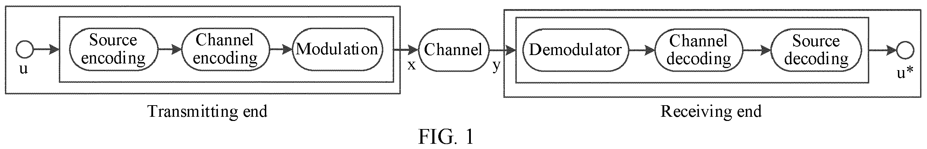

For example, FIG. 1 is a schematic diagram of a conventional end-to-end signal transmission process. As shown in FIG. 1, a communication signal transmission process may be divided into submodules such as source encoding, channel encoding, modulation, channel, demodulation, channel decoding, and source decoding. A transmitting end may send a communication signal u to a receiving end. Specifically, the transmitting end may first convert the communication signal u into a communication signal x by using the submodules such as source encoding, channel encoding, and modulation, and then send the communication signal x to a receiving end through a channel. The communication signal x that passes through the channel has a channel error. Therefore, the communication signal received by the receiving end through the channel is y, and a communication signal u* is obtained by using the submodules such as demodulation, channel decoding, and source decoding.

If end-to-end optimization is implemented in a communication system, in other words, an error between the communication signal u* received by the receiving end and the communication signal u sent by the transmitting end is enabled to be as small as possible, each submodule needs to be optimized. Consequently, complexity of the end-to-end optimization is very high and it cannot be ensured that end-to-end optimization is implemented for the entire communication system.

With development of a deep learning technology, the transmitting end and the receiving end each can process a communication signal by using an autoencoder (autoencoder). Specifically, the transmitting end and the receiving end each can perform modeling in a neural network manner, learn data distribution by using a large quantity of training samples, and then predict a result. Such an end-to-end learning manner can achieve joint optimization, and a conventional end-to-end communication method can achieve a better effect.

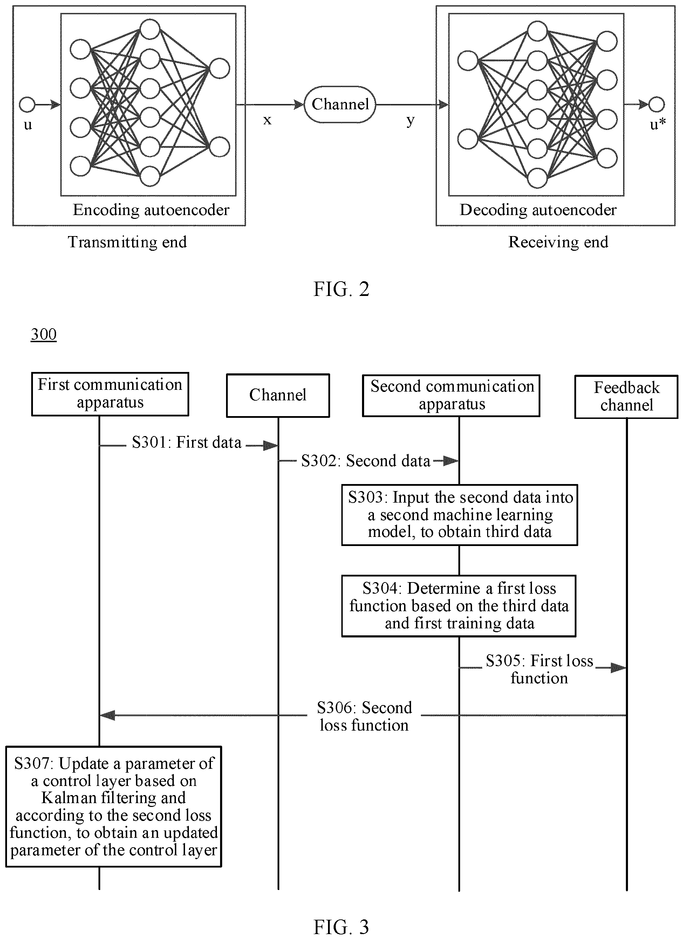

For example, FIG. 2 is a schematic diagram of an end-to-end signal transmission process that is based on an autoencoder. As shown in FIG. 2, a communication signal transmission process may be divided into an encoding autoencoder and a decoding autoencoder, and this reduces a quantity of submodules. A transmitting end may send a communication signal u to a receiving end. Specifically, the transmitting end may convert the communication signal u into a communication signal x by using the encoding autoencoder, and then send the communication signal x to the receiving end through a channel. The communication signal x that passes through the channel has a channel error. Therefore, a communication signal received by the receiving end through the channel is y, and a communication signal u* is obtained by using the decoding autoencoder.

In the communication system, when an optimization degree of the autoencoder is high, end-to-end communication quality can be improved. However, in the communication system, it is generally difficult to represent a channel by using a model. This affects a calculation loss function of the decoding autoencoder, and affects training of the autoencoder, increases training difficulty of the autoencoder, and affects the end-to-end communication quality.

In view of this, embodiments of this application provide a model training method and a related apparatus, to help, when no channel modeling is performed, improve feasibility of training a machine learning model, improve a convergence speed of training the machine learning model, and optimize robustness of the machine learning model. In this way, end-to-end communication quality is improved.

Before the model training method and the related apparatus provided in embodiments of this application are described, the following descriptions are first provided.

First, in the embodiments shown below, terms and English abbreviations such as a control layer and a network layer are all examples given for ease of description, and should not constitute any limitation on this application. This application does not exclude a possibility of defining another term that can implement a same or similar function in an existing or future protocol.

Second, the terms "first", "second", and various numbers in the following embodiments are merely used for differentiation for ease of description, and are not used to limit the scope of embodiments of this application. For example, different communication apparatuses are distinguished from each other, and different machine learning models are distinguished from each other.

Fourth, in the embodiments shown below, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one of a, b, and c may indicate: a, or b, or c, a and b, a and c, b and c, or a, b, and c, where a, b, and c may be singular or plural.

The following uses a first communication apparatus and a second communication apparatus as an example to describe in detail the model training method in this application. The first communication apparatus may be the foregoing terminal device or network device, and the second communication apparatus may be the foregoing terminal device or network device. It should be understood that the first communication apparatus is equivalent to the foregoing transmitting end, and the second communication apparatus is equivalent to the foregoing receiving end.

FIG. 3 is a schematic flowchart of a model training method 300 according to an embodiment of this application. The method 300 may be applied to a communication system including a first communication apparatus and a second communication apparatus. There is at least one first communication apparatus, and a first machine learning model may be deployed in the first communication apparatus. As shown in FIG. 3, the method 300 may include the following steps.

S301: The first communication apparatus may send first data to the second communication apparatus through a channel, where the first data is an output result obtained by inputting first training data into the first machine learning model, the first machine learning model includes a control layer, and the control layer is at least one layer of the first machine learning model.

The control layer may be at least one last layer of network in the first machine learning model, or may be at least one layer of network at any location in the first machine learning model. A location of the control layer in the first machine learning model is not limited in this embodiment of this application.

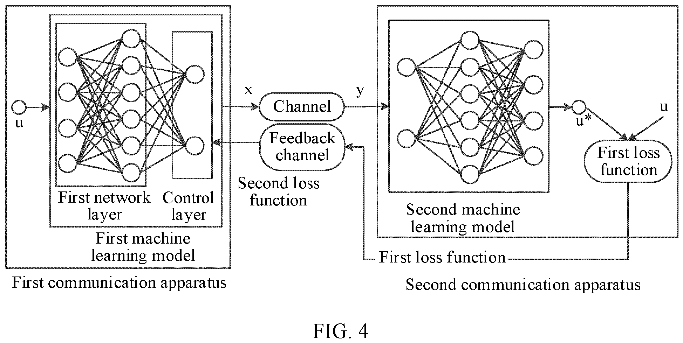

For example, FIG. 4 is a schematic diagram of an end-to-end signal transmission process according to an embodiment of this application. As shown in FIG. 4, the control layer is a last layer of network in the first machine learning model. A quantity of network layers in the first machine learning model in FIG. 4 is merely an example. This is not limited in this embodiment of this application.

It should be understood that the control layer is at least one layer of network selected in the first machine learning model in embodiments of this application, the control layer is merely an example of a name, and all other names having a same characteristic may be included in the protection scope of embodiments of this application.

For example, the first data may be x in FIG. 4, the first training data may be u in FIG. 4, and the first machine learning model may be understood as the decoding autoencoder in FIG. 2 or a neural network model.

S302: The second communication apparatus receives second data through a channel, where the second data is obtained by transmitting, through the channel, the first data sent by the first communication apparatus.

It should be understood that data that passes through a channel causes interference. Therefore, the first data becomes the second data after passing through the channel. The second data may be y in FIG. 4.

S303: The second communication apparatus inputs the second data into a second machine learning model, to obtain third data.

For example, the second machine learning model may be understood as the decoding autoencoder in FIG. 2 or a neural network model. The third data may be u* in FIG. 4.

S304: The second communication apparatus determines a first loss function based on the third data and the first training data.

For example, the second communication apparatus may determine the first loss function by using the third data as a predicted value and the first training data as a real value. The first loss function may also be referred to as a target function. This is not limited in this embodiment of this application.

The first training data is sample data, and may be preset, or may be sent by another communication apparatus. It should be understood that, if the second communication apparatus receives the first training data sent by the another communication apparatus, the first training data does not pass through a channel with an unknown error or unknown noise.

For example, the first communication apparatus sends the first training data u, but the second communication apparatus finally obtains the third data u*. Therefore, the second communication apparatus may determine the first loss function by using the third data u* as the predicted value and the first training data u as the real value. The first loss function is an error function of the third data u* and the first training data u.

It should be understood that an error between the third data and the first training data is caused by a channel.

The first loss function may be a cross entropy, a minimum mean square error, or the like. The first loss function may be used as an observation quantity in Kalman filtering.

S305: The second communication apparatus sends the first loss function to the first communication apparatus through a feedback channel, where the feedback channel is determined based on an observation error, and the first loss function is used to update a parameter of the first machine learning model.

A variance of the feedback channel may be the observation error. For example, the feedback channel may be an additive white Gaussian noise (additive white gaussian noise, AWGN) channel whose average value is 0 and variance is the observation error. When feeding back the first loss function, the second communication apparatus may control transmit power of a signal for feeding back the first loss function, to change a signal-to-noise ratio of the sent signal, and construct an AWGN channel whose variance is the observation error.

The observation error may be determined by the second communication apparatus based on an error between a predicted value and a real value in a period of time. The period of time may be any period of time, and duration of the period of time is not limited in this embodiment of this application.

Optionally, the first loss function may be further used to update a parameter of the second machine learning model. Specifically, the second communication apparatus may update the parameter of the second machine learning model based on reverse gradient propagation and according to the first loss function, to obtain the updated second machine learning model.

S306: The first communication apparatus receives a second loss function through a feedback channel, where the second loss function is obtained by transmitting, through the feedback channel, the first loss function sent by the second communication apparatus.

For example, if a channel error of the feedback channel is an observation error, the second loss function may include the observation error.

S307: The first communication apparatus updates a parameter of the control layer based on the Kalman filtering and according to the second loss function, to obtain an updated parameter of the control layer, where the updated parameter of the control layer is used to update the parameter of the control layer of the first machine learning model.

For example, the second loss function may include the observation error. The second loss function is an observation quantity in a Kalman filtering method. A larger error may indicate that a posterior second loss function (observation quantity) has lower confidence, and it is more inclined to estimate a result of the updated parameter of the control layer. A smaller error may indicate that a posterior second loss function (observation quantity) has higher confidence, and it is more inclined to update a parameter result of the control layer according to the posterior second loss function.

It should be understood that a posterior parameter of the control layer is obtained by the first communication apparatus through calculation according to the second loss function and based on the Kalman filtering, and a prior parameter of the control layer is a parameter of the control layer before each update.

A type of the Kalman filtering may be cubature Kalman filtering, extended Kalman filtering, or the like. The type of the Kalman filtering is not limited in embodiments of this application.

For example, if the type of the Kalman filtering is cubature Kalman filtering, the cubature Kalman filtering may be represented by using the following formula:

$$d_k = h(u_k; \theta_k) + r_k$$

$k$ may be a quantity of training rounds or a training moment, $u_k$ may be the foregoing first training data, $\theta_k$ may be the foregoing parameter of the control layer, and $h(u_k; \theta_k)$ may be an end-to-end non-linear function. The function $h(u_k; \theta_k)$ may represent a non-linear relationship between the foregoing first machine learning model, channel, and second machine learning model, $r_k$ is the observation error, and $d_k$ is the observation quantity.

It should be understood that, theoretically $d_k$ may still be the same as the first training data after passing through the foregoing first machine learning model, channel, and second machine learning model.

According to the model training method provided in this embodiment of this application, when no channel modeling is performed, the second communication apparatus may determine the observation error based on an error between a predicted value and a real value in a period of time, and construct the feedback channel whose variance is the observation error, so that the first communication apparatus updates the parameter of the first machine learning model based on the Kalman filtering. This can reduce impact of a channel error on model training, improve feasibility of the model training, improve a convergence speed of training a machine learning model. An update manner based on the observation quantity in the Kalman filtering method can optimize robustness of the machine learning model. In this way, end-to-end communication quality is improved.

Optionally, the updating a parameter of the control layer based on the Kalman filtering in S307 includes: The first communication apparatus obtains a Kalman gain based on the prior parameter of the control layer, the second loss function, and an error covariance of the second loss function; and the first communication apparatus updates the parameter of the control layer based on the Kalman gain, to obtain the updated parameter of the control layer.

The prior parameter of the control layer may be an initial parameter of the control layer. When the initial parameter of the control layer changes, the prior parameter of the control layer may be a changed parameter of the control layer. It should be understood that the prior parameter of the control layer may change according to the updated parameter of the control layer.

The first communication apparatus may obtain the Kalman gain based on the second loss function and the error covariance of the second loss function that are determined based on the prior parameter of the control layer, the third data, and the first training data, and; and update the parameter of the control layer based on the Kalman gain, to obtain the updated parameter of the control layer.

According to the model training method provided in this embodiment of this application, the Kalman gain is calculated to update the parameter of the control layer, so that impact of the channel error on the update of the parameter of the control layer can be reduced, and accuracy of updating the parameter of the control layer can be improved.

In an optional embodiment, the method 300 further includes: The first communication apparatus updates a parameter of a first network layer in the first machine learning model based on the updated parameter of the control layer and the Kalman gain, to obtain an updated parameter of the first network layer, where the first network layer includes a network layer before the control layer; and the first communication apparatus obtains the updated first machine learning model based on the updated parameter of the control layer and the updated parameter of the first network layer.

It should be understood that, regardless of a specific layer at which the control layer is located in the first machine learning model, the first network layer includes the network layer before the control layer. For example, the first machine learning model has eight network layers in total. If the control layer is located at a 5th layer of the first machine learning model, the first network layer includes first four network layers of the first machine learning model. For another example, the first machine learning model has 12 network layers in total. If the control layer is located at a 10th layer to a 12th layer of the first machine learning model, the first network layer includes first nine network layers of the first machine learning model.

For example, the first network layer may be based on a network structure such as a fully connected layer, a convolutional layer, or a residual network (resnet).

It should be understood that the first communication apparatus may extract a feature of first-time training data by updating the parameters of the control layer and the first network layer, to better implement functions of source encoding, channel encoding, and modulation.

According to the model training method provided in this embodiment of this application, updating the parameters of the control layer and the first network layer helps extract a relationship between training data, and updating the parameter of the first machine learning model based on the Kalman gain and the parameter of the control layer can reduce calculation complexity of the parameter update.

Optionally, after the obtaining the updated first machine learning model, the method 300 further includes: The first communication apparatus sends fourth data to the second communication apparatus through the channel, where the fourth data is an output result obtained by inputting second training data into the first machine learning model; the second communication apparatus receives fifth data through a channel, where the fifth data is obtained by transmitting, through the channel, the fourth data sent by the first communication apparatus; the second communication apparatus inputs the fifth data into the second machine learning model, to obtain sixth data; the second communication apparatus determines a third loss function based on the sixth data and the second training data; if the third loss function is less than a preset threshold, the second communication apparatus sends indication information to the first communication apparatus, where the indication information indicates the first communication apparatus to stop training of the first machine learning model, and correspondingly, the first communication apparatus receives indication information from the second communication apparatus, where the indication information indicates the first communication apparatus to stop training of the first machine learning model; and the first communication apparatus stops the training of the first machine learning model based on the indication information.

After obtaining the updated first machine learning model, the first communication apparatus starts a new round of training. To be specific, the first communication apparatus inputs the second training data into the first machine learning model, to obtain an output result as the fourth data, and sends the fourth data to the second communication apparatus through the channel. The fourth data passes through the channel, and there is a channel error. Therefore, the second communication apparatus receives the fifth data. It is the same as a previous round of training that, the second communication apparatus may obtain the sixth data, and determine the third loss function by using the sixth data as a predicted value and using the second training data as a real value. If the third loss function is less than the preset threshold, the second communication apparatus may determine that the updated first machine learning model obtained through the previous round of training is a model that meets a condition, and this round of training may not be perform any longer. Therefore, the second communication apparatus sends the indication information to the first communication apparatus, where the indication information indicates the first communication apparatus to stop the training of the first machine learning model.

It should be understood that if the third loss function is greater than or equal to the preset threshold, the second communication apparatus repeats steps of the previous round of training to continue the training.

Optionally, the second communication apparatus may periodically determine whether the third loss function is less than the preset threshold, and if the third loss function is less than the threshold, send the indication information to the first communication apparatus. For example, at intervals of specific time or at intervals of a specific quantity of training rounds, the second communication apparatus may determine whether the third loss function is less than the preset threshold. According to the model training method provided in this embodiment of this application, in a process of repeatedly updating the parameter of the first machine learning model, when it is detected that the third loss function meets the preset threshold, the update of the parameter of the first machine learning model may be stopped. This helps reduce unnecessary training, save an operation resource, and reduce power consumption of the first communication apparatus.

Optionally, after determining a third loss function, the second communication apparatus may alternatively send the third loss function to the first communication apparatus through a channel, and the first communication apparatus determines whether the third loss function is less than a preset threshold. If the third loss function is less than the preset threshold, the first communication apparatus stops training of the first machine learning model, and sends indication information to the second communication apparatus. The indication information indicates the second communication apparatus to stop training of the second machine learning model.

Optionally, after the second communication apparatus determines a third loss function, if the third loss function is less than a preset threshold, the second communication apparatus stops sending the third loss function to the first communication apparatus. If not receiving the third loss function within a period of time, the second communication apparatus stops training of the first machine learning model.

In an optional embodiment, after the first communication apparatus receives the second loss function through the channel in S306, the method 300 further includes: The first communication apparatus determines a non-linearity degree of the channel in a first time period based on a variance of a plurality of loss functions received in the first time period, where the plurality of loss functions include the second loss function; and the first communication apparatus determines the type of the Kalman filtering based on the non-linearity degree of the channel in the first time period.

For example, the variance $\sigma^2$ may be represented by using the following formula:

$$\sigma^2 = \frac{1}{T}\sum_{k=1}^{T}\left(L_k - \hat{L}_k\right)$$

$L_k$ is the second loss function at a moment k, T is duration of the first time period, and $\hat{L}_k$ is an average value of a plurality of loss functions in the duration T.

The first communication apparatus may determine the non-linearity degree of the channel by using a value of $\sigma^2$.

It should be understood that the first time period is any period of continuous time, and the duration of the first time period is not limited in this embodiment of this application.

Channels are different in different environments, and the first communication apparatus may determine the type of the Kalman filtering by determining the non-linearity degree of the channel in the first time period.

According to the model training method provided in this embodiment of this application, impact of an environment on the channel may be determined based on the non-linear degree in the first time period, and the impact of the environment on the channel is reduced by changing the type of the Kalman filtering, so that complexity and precision of updating the first machine learning model are balanced.

Optionally, the first communication apparatus may preset a first threshold. When a variance of the second loss function is greater than or equal to the first threshold, the non-linearity degree of the channel in the first time period is strong non-linearity; or when a variance of the second loss function is less than the first threshold, the non-linearity degree of the channel in the first time period is weak non-linearity.

A value of the first threshold and a quantity of first thresholds may be determined by the first communication apparatus based on calculation precision of the Kalman filtering. For example, the first communication apparatus may obtain 2-order estimation precision by using a 3-order integration method of the cubature Kalman filtering, to be specific, a first threshold is set, to classify the non-linearity degree into the strong non-linearity and the weak non-linearity. The first threshold is a value greater than 0 and less than 1. It should be understood that, if the first communication apparatus uses a higher-order integration method in the cubature Kalman filtering, higher calculation precision may be obtained, the first threshold may have different values, and there may be at least one first threshold.

Optionally, when the non-linearity degree of the channel in the first time period is strong non-linearity, the type of the Kalman filtering may be cubature Kalman filtering; or when the non-linearity degree of the channel in the first time period is weak non-linearity, and the type of the Kalman filtering may be extended Kalman filtering.

When the non-linearity degree of the channel is the weak non-linearity, the first communication apparatus may select the extended Kalman filtering with low complexity to update the parameter of the first machine learning model; or when the non-linearity degree of the channel is the strong non-linearity, the first communication apparatus may select the cubature Kalman filtering with high complexity to update the parameter of the first machine learning model.

Optionally, when the non-linearity degree of the channel is strong non-linearity, the first communication apparatus may update the parameter of the first machine learning model in a higher-order integration manner.

For example, if the first communication apparatus uses a 5-order integration method of the cubature Kalman filtering, a quantity of sampling points may be $n^2 + n + 1$, and calculation precision is higher. This is more suitable for channel estimation with strong non-linearity.

Optionally, when the non-linearity degree of the channel is weak non-linearity, the first communication apparatus may reduce a quantity of layers of the control layer; or when the non-linearity degree of the channel is strong non-linearity, the first communication apparatus may increase a quantity of layers of the control layer.

The foregoing parameter of the control layer is $\Theta_c$, and the first communication apparatus may adaptively change a quantity of layers of the parameter $\Theta_c$ of the control layer based on a non-linearity degree of the control layer.

When the non-linearity degree of the channel is weak, a small quantity of parameters of the control layer can eliminate impact of a channel error, and reduce complexity of updating the parameter of the control layer. In addition, when the parameter of the first network layer is updated, a calculation amount of the reverse gradient propagation can be reduced, and complexity of training the first machine learning model can be reduced.

When the non-linearity degree of the channel is strong, a large quantity of parameters of the control layer can eliminate impact of strong non-linearity of a channel error, and improve precision of updating the parameter of the control layer.

In an optional embodiment, the first data may include N groups of data, where N is a positive integer, and a value of N is determined based on a type of the Kalman filtering and a dimension of the parameter of the control layer.

A quantity of pieces of first data may be determined based on the type of the Kalman filtering and the dimension of the parameter of the control layer.

For example, if the dimension of the parameter of the control layer is 6, and the type of the Kalman filtering is the cubature Kalman filtering, the quantity of pieces of first data may be 2 * 6 = 12, to be specific, the first communication apparatus adds two disturbances on the left and right to a parameter of each dimension of the control layer, to obtain 12 sampling points. If the first training data is a group of data, the first communication apparatus separately inputs the group of data into the first machine learning model, to obtain 12 groups of first data.

For example, if the type of the Kalman filtering is the extended Kalman filtering, the first data may be one group of data, to be specific, the parameter of the control layer does not need to be sampled. The foregoing manner of updating the parameter of the control layer is still applicable.

The following describes in detail a model training method according to an embodiment of this application by using an example in which the first communication apparatus performs model training after sampling a parameter of a control layer.

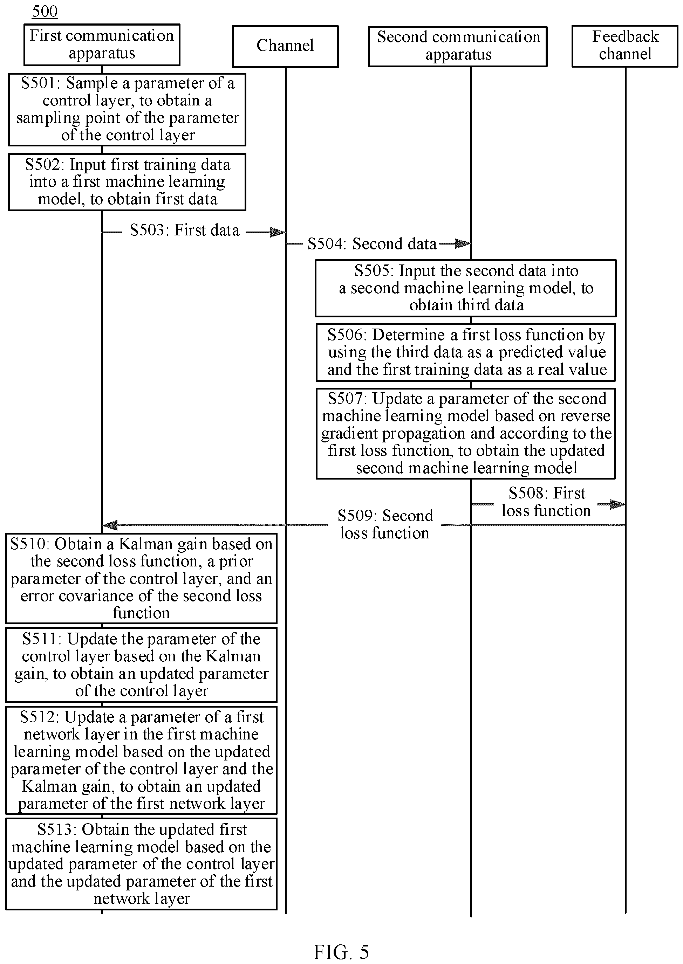

FIG. 5 is a schematic flowchart of another model training method 500 according to an embodiment of this application. As shown in FIG. 5, the method may include the following steps.

S501: A first communication apparatus samples a parameter of a control layer, to obtain a sampling point of the parameter of the control layer.

The control layer may be at least one last layer of network of a first machine learning model.

For example, before training the first machine learning model, the first communication apparatus may first initialize the parameter $\theta_0$ of the control layer and an error covariance $P_{0|0} = I$ of the parameter $\theta_0$ of the control layer in the first machine learning model. Then, the first communication apparatus may sample $\theta_0$. For example, a sampling point at a moment k may be represented as $\hat{\theta}_{k|k-1}$, where k $\geq$ 1, and a sampling point at a moment 0 may be denoted as $\hat{\theta}_{0|0} = \theta_0$. It should be understood that the moment may be understood as a sampling moment or a quantity of sampling times.

$\hat{\theta}_{k|k-1}$ may be represented by using the following formula (1):

$$\widehat{\theta}_{k|k-1} = \int \theta_{k-1} \mathcal{N}(\widehat{\theta}_{k-1|k-1}, P_{k-1|k-1}) d\theta_{k-1} \quad (1)$$

$\mathcal{N}(\hat{\theta}_{k-1|k-1}, P_{k-1|k-1})$ represents a Gaussian distribution that complies with an average value of $\hat{\theta}_{k-1|k-1}$ and a variance of $P_{k-1|k-1}$, $\hat{\theta}_{k-1|k-1}$ is an updated parameter of the control layer at a moment k-1, $P_{k-1|k-1}$ is an error covariance of the parameter of the control layer at the moment k-1, and is used to measure accuracy of estimation, and $\theta_{k-1}$ is the parameter of the control layer at the moment k-1.

It should be understood that, $\hat{\theta}_{k|k-1}$ may be understood as a predicted (prior estimation) value that is of the parameter at the moment k that is based on a result at the moment k-1. k is a moment at which the Kalman filtering is updated or a quantity of training times. A value range of k is determined by an entire training process, in other words, training is terminated after the first loss function is less than a preset threshold.

$P_{k|k-1}$ is an error covariance between a sampling parameter of the control layer at the moment k-1 and a sampling parameter of the control layer at the moment k, and $P_{k|k-1}$ may be represented by using the following formula (2):

$$P_{k|k-1} = \int \theta_{k-1} \theta_{k-1}^T \mathcal{N}(\widehat{\theta}_{k-1|k-1}, P_{k-1|k-1}) d\theta_{k-1} - \widehat{\theta}_{k|k-1} \widehat{\theta}_{k|k-1}^T + Q_{k-1} \quad (2)$$

$Q_{k-1}$ is system noise, and a relationship between $Q_{k-1}$ and $P_{k|k-1}$ may be represented by using the following formula (3):

$$Q_{k-1} = \frac{1-\lambda}{\lambda} P_{k-1|k-1} \quad (3)$$

$\lambda$ is a forgetting factor, represents that an exponential attenuation weight is applied to past data, and has a value range of $0 < \lambda \leq 1$.

Therefore, the representation of $P_{k|k-1}$ may be converted to representation using the following formula (4):

$$P_{k|k-1} = \frac{1}{\lambda} P_{k-1|k-1} \quad (4)$$

If a type of the Kalman filtering is cubature Kalman filtering, the first communication apparatus may calculate a Gaussian weight integral by using a volume method, as shown in the following formula (5):

$$\int f(\theta) \mathcal{N}(\widehat{\theta}, P) d\theta \approx \frac{1}{2n} \sum_{i=1}^{2n} f(S\gamma_i + \widehat{\theta}) \quad (5)$$

$P = SS^T$, where S is orthogonal triangular decomposition of P and $S = \sqrt{P}$, $\gamma_i$ is an integral point, and $\gamma_i$ may be represented by using the following formula:

$$\gamma_i = \begin{cases} \sqrt{n}\, e_{i-1}; & 1 \le i \le n \\ -\sqrt{n}\, e_{i-n-1}; & n+1 \le i \le 2n \end{cases} \quad (6)$$

$e_i$ represents a unit column vector whose $i^{th}$ element is 1.

Therefore, the sampling point $\hat{\theta}_{k|k-1}$ of the parameter of the control layer may be obtained through calculation by generating 2n sampling points, where n is a positive integer greater than or equal to 1.

S502: The first communication apparatus may input first training data into the first machine learning model, to obtain first data, where the first machine learning model includes the sampling point of the parameter of the control layer.

The first training data is a group of data. If the type of the Kalman filtering is the cubature Kalman filtering, there are 2n sampling points of the parameter of the control layer, and the first data may be 2n groups of data.

S503: The first communication apparatus may send the first data to a second communication apparatus through a channel.

S504: The second communication apparatus receives second data through a channel, where the second data is obtained by transmitting, through the channel, the first data sent by the first communication apparatus.

It should be understood that if the first data is 2n groups of data, the second data is also 2n groups of data.

S505: The second communication apparatus inputs the second data into a second machine learning model, to obtain third data.

It should be understood that the third data is 2n groups of data.

For example, it is assumed that a non-linear function expressed by the first machine learning model, the channel, and the second machine learning model is $h(u; \theta)$, where $u$ is an input of a communication system, and $\theta$ is the parameter of the control layer. In this case, the third data may be represented by using the following formula (7):

$$\hat{d}_{k|k-1} = \int h(u_k; \theta_k)\, \mathcal{N}\big(\hat{\theta}_{k|k-1}, P_{k|k-1}\big)\, d\theta_k \quad (7)$$

$u_k$ is the first training data, $\theta_k$ is the parameter of the control layer at the moment, $\mathcal{N}(\hat{\theta}_{k|k-1}, P_{k|k-1})$ represents a Gaussian distribution that complies with an average value of $\hat{\theta}_{k|k-1}$ and a variance of $P_{k|k-1}$, and $k$ is a quantity of training rounds or a training moment.

$\hat{\theta}_{k|k-1}$ may be represented by using the foregoing formula (1), and $P_{k|k-1}$ may be represented by using the foregoing formula (2).

The second communication apparatus may estimate an error covariance $P_{dd}$ between the third data based on the third data, where $P_{dd}$ may be represented by using the following formula (8):

$$P_{dd} = \int h(u_k; \theta_k) h^T(u_k; \theta_k)\, \mathcal{N}\big(\hat{\theta}_{k|k-1}, P_{k|k-1}\big)\, d\theta_{k-1} - \hat{d}_{k|k-1}\hat{d}^T_{k|k-1} + R_k \quad (8)$$

$R_k$ is a covariance of an observation error.

The second communication apparatus may calculate a Gaussian weight integral by using a volume method.

For example, if $d_{i,k|k-1} = h(u_k; \theta_{i,k|k-1})$ may be denoted as third data obtained by substituting 2n different sampling points $\theta_{i,k|k-1}$ into $h(u_k; \theta_k)$, the third data may be $\hat{d}_{k|k-1} = \dfrac{1}{2n}\sum d_{i,k|k-1}$, and $P_{dd}$ may be represented by using the following formula (9):

$$P_{dd} = \frac{1}{2n}\sum d_{i,k|k-1} d^T_{i,k|k-1} - \hat{d}_{k|k-1}\hat{d}^T_{k|k-1} + R_k \quad (9)$$

Alternatively, $P_{dd}$ may be represented by using the following formula (10):

$$P_{dd} = \frac{1}{2n}\sum (d_{i,k|k-1} - \hat{d}_{k|k-1})\,(d_{i,k|k-1} - \hat{d}_{k|k-1})^T + R_k = DD^T + R_k \quad (10)$$

$1 \le i \le 2n$, D is a central vector, and D may be represented by using the following formula (11):

$$D = \frac{1}{\sqrt{2n}} [d_{1,k|k-1} - \hat{d}_{k|k-1}, d_{2,k|k-1} - \hat{d}_{k|k-1}, ..., d_{2n,k|k-1} - \hat{d}_{k|k-1}] \quad (11)$$

S506: The second communication apparatus determines the first loss function by using the third data as a predicted value and the first training data as a real value.

It should be understood that there are 2n first loss functions. To be specific, the first training data passes through each sampling point to obtain one piece of data, the first data passes through the channel to obtain one piece of third data, and one first loss function is obtained based on the one piece of third data and the first training data. Therefore, there are the 2n sampling points and the 2n first loss functions.

The second communication apparatus may calculate a cross entropy as the first loss function, and the first loss function $L_k$ may be represented by using the following formula (12):

$$L_k = -\sum u_k \, log \, h(u_k; \theta_k) \quad (12)$$

The first training data is $u_k$, and the third data is $h(u_k; \theta_k)$.

A training objective is to enable an error between the real value and the third data as small as possible, in other words, to enable the first loss function $L_k$ to have a value as small as possible. Therefore, $L_k$ may be approximated to be 0, that is, as shown in the following formula (13):

$$L_k = |h(u_k; \theta_k) - u_k| \approx 0 \quad (13)$$

In this case, the second communication apparatus may observe the first loss function instead of calculating the observed third data. Therefore,

The representation of $P_{dd}$ may be changed to representation using the following formula (14):

$$P_{dd} = \frac{1}{2n} \sum L_{i,k|k-1} L^T_{i,k|k-1} - \hat{L}_{k|k-1} \hat{L}^T_{k|k-1} + R_k \quad (14)$$

In addition, an observation value of the second communication apparatus, namely, the first loss function, may be denoted as $L_{i,k}$, where there are 2n first loss functions, and $i$ may be an integer that traverses f 1, 2, ..., 2n}.

S507: The second communication apparatus updates a parameter of the second machine learning model based on reverse gradient propagation and according to the first loss function, to obtain the updated second machine learning model.

For example, the second communication apparatus may calculate an average value of the first loss function, use the average value of the first loss function, and update the parameter of the second machine learning model based on the reverse gradient propagation.

The average value of the first loss function may be $\hat{L}_k = \frac{1}{2n} \sum L_{i,k}$, where $L_{i,k}$ is the 2n first loss functions.

S508: The second communication apparatus sends the first loss function to the first communication apparatus through a feedback channel, where the feedback channel is determined by the second communication apparatus based on the observation error, and the first loss function is used to update a parameter of the first machine learning model.

For example, the second communication apparatus may send the first loss function $L_{i,k}$ to the first communication apparatus through the feedback channel, that is, separately send the 2n first loss functions.

The second communication apparatus may dynamically estimate the observation error based on an environment change, and construct the feedback channel by performing power control to enable a channel error to be approximately the same as the observation error.

For example, the second communication apparatus may define an error between the predicted value and the real value as $\hat{L}_k$, and first preset an error covariance $R_k^0 = R_{max}$, where a value of $R_{max}$ may be an empirical value, and the empirical value may be determined by the second communication apparatus based on an error covariance received from the first communication apparatus. The second communication apparatus may estimate an error covariance $P_v^i$ between a predicted value and a real value in a period of time according to $\hat{L}_k$, and $P_v^i$ may be represented by using the following formula (15):

$$P_v^i \approx \frac{1}{T_i}\sum_{k=1}^{T_i}\hat{L}_k\hat{L}_k^T \quad (15)$$

$T_i$ is duration of the period of time, and $i \geq 0$.

For a subsequent time period $T_{i+1}$, let $R_k^{i+1} = \lambda R_k^i$, where $0 < \lambda \leq 1$. $P_v^{i+1}$ of the time period is calculated again. If $P_v^{i+1} > P_v^i$ in this case, adjustment is stopped, and let an observation error covariance $R_k = R_k^i$; otherwise, $R_k$ continues to be adjusted in a time period $T_{i+2}$. If the error covariance jumps, that is, $\frac{\|P_v^{i+1}-P_v^i\|}{P_v^i} > 1$, it means that the environment change is great. In this case, $R_k = R_{max}$ is reset, and the foregoing steps are repeated.

In addition, a correspondence table may also be established for the adjustment of $R_k$, where the correspondence table includes a correspondence between an index and a value of $R_k$, and indexes may correspond to $R_{max}$ to $R_{min}$ in descending order of the indexes. The second communication apparatus may determine selection of $R_k$ by calculating $P_v^{i+1}$ and $P_v^i$ values of two time periods. For example, when $P_v^{i+1} < P_v^i$, the index is decreased by 1, and correspondingly selected $R_k$ is decreased; otherwise, the adjustment is stopped, and let the observation error covariance $R_k = R_k^i$.

$R_k = r_k I$, where $I$ is a unit matrix, and $r_k$ is a variance.

Through power control, the second communication apparatus may model a channel as an additive white Gaussian noise (additive white gaussian noise, AWGN) channel whose average value is 0 and variance is $r_k$, and feed back 2n first loss functions $L_{i,k}$ to the first communication apparatus, so that the first communication apparatus updates the parameter of the control layer.

Optionally, the second communication apparatus may send the average value of the first loss function to the first communication apparatus through a channel, that is, $\hat{L}_k = \frac{1}{2n}\sum L_{i,k}$, and send the central vector **D** to the first communication apparatus at the same time.

S509: The first communication apparatus receives a second loss function through a feedback channel, where the second loss function is obtained by transmitting, through the channel, the first loss function sent by the second communication apparatus.

The second communication apparatus models the feedback channel as an AWGN channel whose channel error is the observation error $r_k$. Therefore, the second loss function $\tilde{L}_{i,k}$ is obtained by transmitting the first loss function through the feedback channel, that is, as shown in the following formula (16):

$$\tilde{L}_{i,k} = L_{i,k} + r_k \quad (16)$$

To be specific, the first loss function sent by the second communication apparatus to the first communication apparatus through the feedback channel is $\tilde{L}_{i,k}$, and in this case, the second loss function received by the first communication apparatus is $\tilde{L}_{i,k}$.

Optionally, if the second communication apparatus transmits the average value of the first loss function to the first communication apparatus, the second communication apparatus may send the central vector **D** to the first communication apparatus through the feedback channel. Correspondingly, the first communication apparatus may receive the average value of the second loss function and the central vector **D** with an observation error through the feedback channel.

S510: The first communication apparatus obtains a Kalman gain based on the second loss function, a prior parameter of the control layer, and an error covariance of the second loss function.

For example, first, the first communication apparatus may estimate the error covariance of the second loss function according to the second loss function.

Because an error of the feedback channel is expected to be 0, that is, $\mathbb{E}(r_k) = 0$, and $\mathbb{E}(\tilde{L}_{i,k}) = \mathbb{E}(L_{i,k})$.

, the error covariance of the second loss function may be expressed by using a formula (17):

$$P_{dd}^* = \mathbb{E}[(\tilde{L}_{i,k} - \hat{L}_k)(\tilde{L}_{i,k} - \hat{L}_k)]$$
$$= \mathbb{E}[(L_{i,k} + r_k - \hat{L}_k)(L_{i,k} + r_k - \hat{L}_k)]$$
$$= \mathbb{E}[(L_{i,k} - \hat{L}_k)(L_{i,k} - \hat{L}_k)] + R_k \quad (17)$$

It should be understood that the error covariance $P_{dd}^*$ of the second loss function is the same as $P_{dd}$ in the foregoing formula (8).

Then, the first communication apparatus may obtain a cross covariance $P_{\theta d}$ of the second loss function based on the prior parameter of the control layer, where $P_{\theta d}$ may be represented by using the following formula (18):

$$P_{\theta d} = \int \theta_k h^T(u_k; \theta_k) \mathcal{N}(\hat{\theta}_{k|k-1}, P_{k|k-1}) d\theta_k - \theta_{k|k-1} \ \hat{d}_{k|k-1}^T \quad (18)$$

Further, $P_{\theta d}$ may be represented by using the following formula (19) or (20):

$$P_{\theta d} = \frac{1}{2n} \sum \theta_{i,k|k-1} \tilde{L}_{i,k}^T - \hat{\theta}_{k|k-1} \hat{L}_k^T \quad (19)$$

or

$$P_{\theta d} = \frac{1}{2n} \sum (\theta_{i,k|k-1} - \hat{\theta}_{k|k-1}) \ (d_{i,k|k-1} - \hat{d}_{k|k-1})^T = \boldsymbol{\Theta} \mathbf{D}^T \quad (20)$$

where

$$\boldsymbol{\Theta} = \frac{1}{\sqrt{2n}} [\theta_{1,k|k-1} - \hat{\theta}_{k|k-1}, \theta_{2,k|k-1} - \hat{\theta}_{k|k-1}, \dots, \theta_{2n,k|k-1} - \hat{\theta}_{k|k-1}]$$

Finally, the first communication apparatus may obtain the Kalman gain $G_k$ based on the error covariance of the second loss function and the cross covariance of the second loss function, where $G_k$ may be represented by using the following formula (21):

$$G_k = P_{\theta d} P_{dd}^{-1} \quad (21)$$

S511: The first communication apparatus updates the parameter of the control layer based on the Kalman gain, to obtain an updated parameter of the control layer.

For example, the updated parameter $\hat{\theta}_{k|k}$ of the control layer may be represented by using the following formula (22):

$$\hat{\theta}_{k|k} = \hat{\theta}_{k|k-1} + G_k \hat{L}_k \quad (22)$$

S512: The first communication apparatus updates a parameter of a first network layer in the first machine learning model based on the updated parameter of the control layer and the Kalman gain, to obtain an updated parameter of the first network layer, where the first network layer includes a network layer before the control layer.

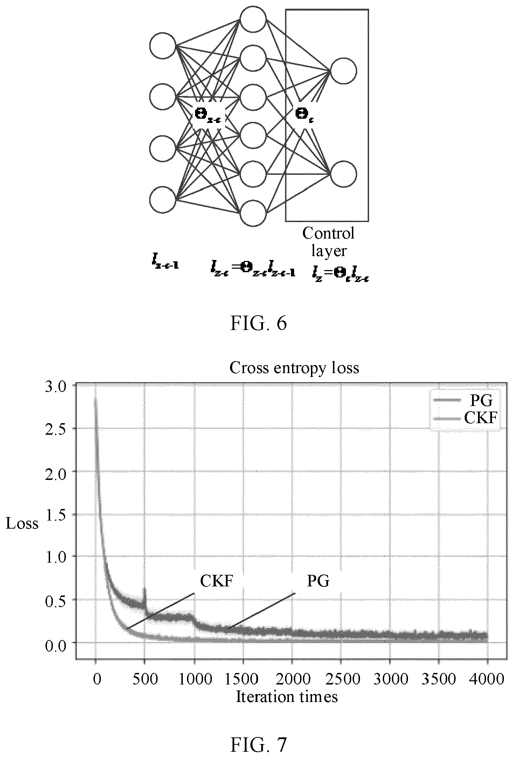

For example, FIG. 6 is a schematic diagram of updating a parameter of a first network layer. As shown in FIG. 6, a parameter of a control layer is denoted as $\Theta_c$, the parameter of the first network layer is denoted as $\Theta_{z-c}$, $\Theta_{z-c}$ represents a weight between a layer $l_{z-c-1}$ and a layer $l_{z-c}$ to which the parameter of the first network layer belongs in a network, and $l_{z-c}$ is a parameter of a layer to which the parameter of the first network layer belongs in the neural network, where $l_z = \Theta_c l_{z-c}$, $l_{z-c} = \Theta_{z-c} l_{z-c-1}$, and c may represent a quantity of network layers of the control layer.

A gradient based on Kalman filtering may be $\boldsymbol{\Theta}_c^{j+1} = \boldsymbol{\Theta}_c^{j} - G\widehat{L}$ , where $j$ is a quantity of update times, G is a Kalman gain obtained through a $j^{th}$ time of calculation, and $\widehat{L}$ is a second loss function obtained through the $j^{th}$ time of calculation. It is assumed that $G\widehat{L} = \alpha \frac{\partial L}{\partial l_z} l_{z-c}$ , and $l^+$ represents a pseudo inverse of a vector. In this case, a parameter update manner of a network layer previous to the control layer may be obtained, that is, it may be shown by using the following formula (23):

$$
\begin{aligned}
\boldsymbol{\Theta}_{z-c}^{j+1} &= \boldsymbol{\Theta}_{z-c}^{j} - \alpha \frac{\partial L}{\partial \boldsymbol{\Theta}_{z-c}} \\
&= \boldsymbol{\Theta}_{z-c}^{j} - \alpha \frac{\partial L}{\partial l_z} \frac{\partial l_z}{\partial l_{z-c}} \frac{\partial l_{z-c}}{\partial \boldsymbol{\Theta}_{z-c}} \\
&= \boldsymbol{\Theta}_{z-1}^{j} - G\widehat{L} l_{z-c}^{+} \boldsymbol{\Theta}_c l_{z-c-1} \quad (23)
\end{aligned}
$$

z is a total quantity of network layers of the first machine learning model, and j may be an integer that traverses {1, 2, ..., z-c}.

By analogy, for another network at the first network layer, updating is performed in this update manner, and details are not described herein again.

S513: The first communication apparatus obtains the updated first machine learning model based on the updated parameter of the control layer and the updated parameter of the first network layer.

According to the model training method provided in this embodiment of this application, the parameter of the control layer is sampled, and the Kalman filtering is better combined into model training, to further improve feasibility of the model training, improve a convergence speed of training an autoencoder, and optimize robustness of the autoencoder. In this way, end-to-end communication quality is improved.

In this embodiment of this application, simulation is further performed on the method 500, to check an effect of the method 500. For example, simulation is performed on an AWGN time-varying disturbance channel, and an effect of the method 500 provided in this embodiment of this application is compared with an effect of a policy gradient (policy gradient, PG) that is based on reinforced learning. The method 500 provided in this embodiment of this application is a training method that is based on the cubature Kalman filtering (cubature kalman filter, CKF).

In the simulation, a signal-to-noise ratio of the channel changes in real time, and a value range of the signal-to-noise ratio may be set to [10, 25], where a unit of the signal-to-noise ratio is decibel. In addition, in the simulation, a modulation order is 4, a length of first training data is 256, and before the first training data is input into a machine learning model that is based on the cubature Kalman filtering, one-hot (one-hot) encoding needs to be performed to obtain training data whose length is 16.

The above simulation is iterated for 4000 times separately for the CKF and the PG, and cross entropy losses and bit error rate changes of the two algorithms are separately observed.

FIG. 7 is a schematic diagram of cross entropy losses that are based on a model training method according to an embodiment of this application. As shown in FIG. 7, as a quantity of iteration times increases, a falling speed of CKF is greater than that of a PG, a loss disturbance of the CKF is less than a loss disturbance of the PG, and a cross entropy loss of the CKF is less than a cross entropy loss of the PG. A smaller cross entropy loss indicates smaller impact of a channel on communication between a first communication apparatus and a second communication apparatus.

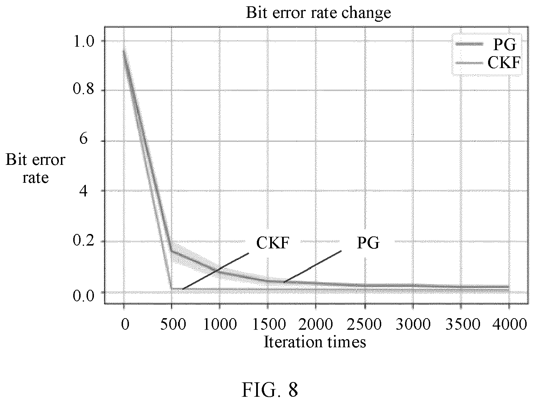

FIG. 8 is a schematic diagram of bit error rate changes that are based on a model training method according to an embodiment of this application. As shown in FIG. 8, as a quantity of iteration times increases, a falling speed of CKF is greater than that of a PG, and a bit error rate of the CKF is less than a bit error rate of the PG.

It can be learned from FIG. 7 and FIG. 8 that a CKF-based training method can improve a convergence speed and robustness of model training.

In an optional embodiment, the first data may include M groups of data, where M is a positive integer, a value of M is determined by a first communication apparatus and another first communication apparatus according to a preset rule, and a sum of M and a quantity of pieces of data sent by the another first communication apparatus is determined based on a type of Kalman filtering and a dimension of a parameter of a control layer.

Data sent by the another first communication apparatus includes an output result of a machine learning model in each of the another first communication apparatus.

In a device-to-device communication system, there may be a plurality of first communication apparatuses, and there may be one second communication apparatus. In the communication system, the first communication apparatus and another first communication apparatus may determine a quantity M of the first data according to the preset rule. The preset rule may be that in the communication system, a quantity of output results of a machine learning model in each first communication apparatus is greater than or equal to 1, and a sum of quantities of output results of machine learning models in all first communication apparatuses is determined by the type of the Kalman filtering and the dimension of the parameter of the control layer. The plurality of first communication apparatuses in the communication system may determine their own sampling points by communicating with each other. For example, if there are a first communication apparatuses in total in the communication system, and the a first communication apparatuses form a ring topology structure, a-1 first communication apparatuses may determine a sampling point number time sequence by communicating with each other.

According to the model training method provided in this embodiment of this application, the sampling at the control layer is divided into the plurality of subtasks, and the plurality of first communication apparatuses jointly complete the subtasks, so that an operation amount of the first communication apparatus can be reduced, thereby reducing operation load of the first communication apparatus, and ensuring deployment and implementation of online training.

In the communication system, when the first communication apparatus is a distributed central first communication apparatus in the communication system, a parameter of a control layer may still be updated according to the foregoing method 300, to obtain an updated parameter of the control layer.

It should be understood that the first communication apparatus may send first data to the second communication apparatus through a channel. The first data may include M groups of data. If a sum of quantities of output results of machine learning models in the plurality of first communication apparatuses in the communication system is P, the first communication apparatus may receive P first loss functions through a channel. It should be understood that a value of P is greater than or equal to the value of M. The first communication apparatus may update the parameter of the control layer based on the P first loss functions, to obtain the updated parameter of the control layer. The first communication apparatus may transmit the updated parameter of the control layer to the another first communication apparatus in a manner of mutual communication.

It should be understood that a plurality of first communication apparatuses in the communication system use a central distributed training method to divide sampling at the control layer into a plurality of subtasks, and the plurality of first communication apparatuses jointly complete the subtasks. The foregoing first communication apparatus may be used as a central communication apparatus, and may receive the first loss function sent by the second communication apparatus, perform training to obtain the parameter of the control layer, and then deliver the parameter to another first communication apparatus.

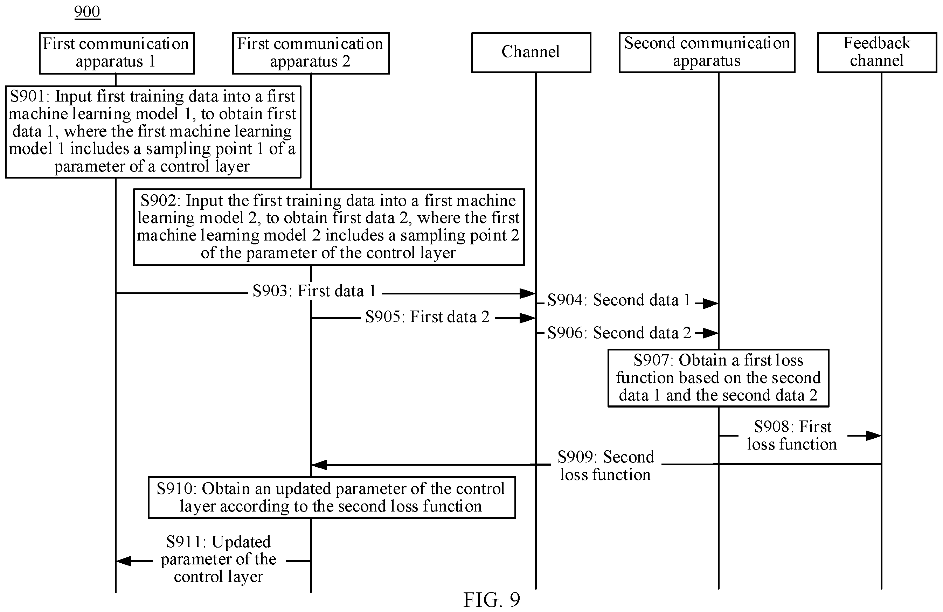

For example, FIG. 9 is a schematic flowchart of another model training method 900. As shown in FIG. 9, a communication system may include a first communication apparatus 1, a first communication apparatus 2, and a second communication apparatus. A first machine learning model 1 is deployed on the first communication apparatus 1, and a first machine learning model 2 is deployed on the first communication apparatus 2. It should be understood that a quantity of first communication apparatuses in the communication system is merely an example, and that the first communication apparatus 2 is a distributed central first communication apparatus is merely an example. This is not limited in this embodiment of this application.

As shown in FIG. 9, the method 900 may include the following steps.

S901: The first communication apparatus 1 inputs first training data into the first machine learning model 1, to obtain first data 1, where the first machine learning model 1 includes a sampling point 1 of a parameter of a control layer, and the sampling point 1 of the parameter of the control layer is obtained by the first communication apparatus 1 by sampling the parameter of the control layer in the first machine learning model 1.

S902: The first communication apparatus 2 inputs the first training data into the first machine learning model 2, to obtain first data 2, where the first machine learning model 2 includes a sampling point 2 of the parameter of the control layer, and the sampling point 2 of the parameter of the control layer is obtained by the first communication apparatus 2 by sampling the parameter of the control layer in the first machine learning model 2.

Initial parameters of the first machine learning model 1 and the second machine learning model 2 may be the same or may be different.

The first communication apparatus 1 and the first communication apparatus 2 may determine a quantity of sampling points 1 and a quantity of sampling points 2 according to a preset rule. For example, if the first communication apparatus 1 or the first communication apparatus 2 trains the first machine learning model 1 or the first machine learning model 2 through cubature Kalman filtering, and the first machine learning model 1 and the first machine learning model 2 have a same quantity of network layers, namely, n, a sum of the quantity of sampling points 1 and the quantity of sampling points 2 is 2n, and a ratio of the quantity of sampling points 1 to the quantity of sampling points 2 may be any value greater than 0.

The first communication apparatus 2 may obtain the sampling point 2 of the parameter of the control layer by sampling the parameter of the control layer.

S903: The first communication apparatus 1 sends the first data 1 to the second communication apparatus through a channel.

S904: The second communication apparatus receives second data 1 through a channel, where the second data 1 is obtained by transmitting the first data 1 through the channel.

S905: The first communication apparatus 2 sends the first data 2 to the second communication apparatus through a channel.

S906: The second communication apparatus receives second data 2 through a channel, where the second data 2 is obtained by transmitting the first data 2 through the channel.

S907: The second communication apparatus determines a first loss function based on the second data 1 and the second data 2.

The second communication apparatus may separately input the second data 1 and the second data 2 into the second machine learning model, to obtain third data 1 and third data 2, determine a first loss function 1 by using the third data 1 as a predicted value and the first training data as a real value, and determine a first loss function 2 by using the third data 2 as a predicted value and the first training data as a real value. The first loss function includes the first loss function 1 and the first loss function 2. A specific implementation is the same as that of S505 and S506, and details are not described herein again.

S908: The second communication apparatus sends the first loss function to the first communication apparatus 2 through a feedback channel.

A process of constructing the feedback channel by the second communication apparatus is the same as that in the foregoing embodiment, and details are not described herein again.

S909: The first communication apparatus 2 receives a second loss function through a feedback channel, where the second loss function is obtained by transmitting the first loss function through the feedback channel.

The first communication apparatus 2 is a central first communication apparatus, and the first communication apparatus 2 may receive all second loss functions sent by the second communication apparatus through a feedback channel.

S910: The first communication apparatus 2 obtains an updated parameter of the control layer according to the second loss function.

S911: The first communication apparatus 2 sends the updated parameter of the control layer to the first communication apparatus 1.

The first communication apparatus 2 is a central first communication apparatus, and may send the updated parameter of the control layer to another first communication apparatus, namely, the first communication apparatus 1.

According to the model training method provided in this embodiment of this application, a central distributed training method is used to divide control layer sampling into a plurality of subtasks. Two first communication apparatuses jointly complete the subtasks, and this reduces an operation amount of a non-central first communication apparatus (the first communication apparatus 1). A central first communication apparatus sends an updated parameter of a control layer to another first communication apparatus, and this improves efficiency of updating a parameter of the control layer.

Optionally, the first communication apparatus 1 may further send the first data 1 to the first communication apparatus 2. The first communication apparatus 2 combines the first data 1 and the first data 2 and then sends them together to the second communication apparatus through a channel.

Optionally, after the first communication apparatus updates the parameter of the first machine learning model according to the method in the method 300, the first communication apparatus may further transmit an updated parameter of the first machine learning model to another first communication apparatus in a manner of mutual communication.

According to the model training method provided in this embodiment of this application, the central distributed training method is used. After completing training, the central first communication apparatus may send an updated model parameter to another first communication apparatus. This reduces training costs of the another first communication apparatus, and reduces a calculation amount of the another first communication apparatus.

Optionally, after the first communication apparatus determines the Kalman gain according to the method in the method 300, the first communication apparatus may further transmit the updated parameter of the control layer and the Kalman gain to another first communication apparatus in a manner of mutual communication. The another first communication apparatus may update a parameter of a first network layer in the first machine learning model based on the updated parameter of the control layer and the Kalman gain that are received and based on reverse gradient propagation, to update the parameter of the first machine learning model.

Optionally, the first communication apparatus may transmit the prior parameter of the control layer, the second loss function, the error covariance of the second loss function, and the updated parameter of the control layer to the another first communication apparatus in a manner of mutual communication. The another first communication apparatus may first determine the Kalman gain based on the prior parameter of the control layer, the second loss function, and the error covariance of the second loss function that are received, and then updates the parameter of the first network layer in the first machine learning model based on the updated parameter of the control layer and the Kalman gain and based on the reverse gradient propagation, to update the parameter of the first machine learning model.

Sequence numbers of the foregoing processes do not mean an execution sequence. The execution sequence of the processes should be determined based on functions and internal logic of the processes, and should not be construed as any limitation on implementation processes of embodiments of this application.

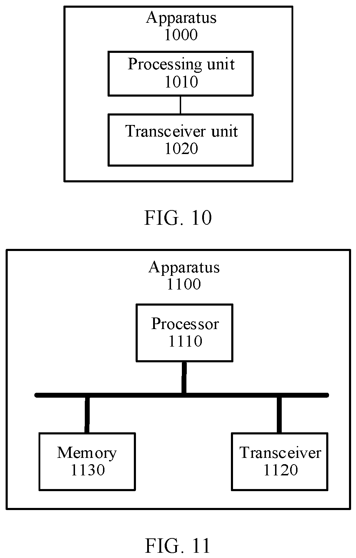

The foregoing describes in detail the model training methods in embodiments of this application with reference to FIG. 1 to FIG. 9. The following describes in detail model training related apparatuses in embodiments of this application with reference to FIG. 10 and FIG. 11.

FIG. 10 is a schematic block diagram of a model training related apparatus 1000 according to an embodiment of this application. The apparatus 1000 includes a transceiver unit 1010 and a processing unit 1020.

In a possible implementation, the apparatus 1000 may implement steps or procedures performed by the first communication apparatus associated with the foregoing embodiment of the method 300.

The transceiver unit 1010 is configured to: send first data to a second communication apparatus through a channel, where the first data is an output result obtained by inputting first training data into a first machine learning model, the first machine learning model includes a control layer, and the control layer is at least one layer of the first machine learning model; and receive a second loss function through a feedback channel, where the feedback channel is determined based on an observation error, and a first loss function is obtained by transmitting, through the feedback channel, the first loss function sent by the second communication apparatus. The processing unit 1020 is configured to update a parameter of the control layer based on Kalman filtering and according to the first loss function, to obtain an updated parameter of the control layer, where the updated parameter of the control layer is used to update a parameter of the first machine learning model.

Optionally, the processing unit 1020 is further configured to: obtain a Kalman gain based on a prior parameter of the control layer, the second loss function, and an error covariance of the second loss function; and update the parameter of the control layer based on the Kalman gain, to obtain the updated parameter of the control layer.

Optionally, the transceiver unit 1010 is further configured to: send fourth data to the second communication apparatus through the channel, where the fourth data is an output result obtained by inputting second training data into the first machine learning model; and receive indication information from the second communication apparatus, where the indication information indicates the apparatus to stop training of the first machine learning model. The processing unit 1020 is further configured to stop the training of the first machine learning model based on the indication information.

Optionally, the first data includes N groups of data, where N is a positive integer, and a value of N is determined based on a type of the Kalman filtering and a dimension of the parameter of the control layer.

Optionally, the first data includes M groups of data, where M is a positive integer, a value of M is determined by the apparatus and another first communication apparatus according to a preset rule, and a sum of M and a quantity of pieces of data sent by the another first communication apparatus is determined based on a type of the Kalman filtering and a dimension of the parameter of the control layer.

Optionally, the transceiver unit 1010 is further configured to: send, by the first communication apparatus, the updated parameter of the control layer to the another first communication apparatus.

Optionally, the processing unit 1020 is further configured to: determine a non-linearity degree of the channel in a first time period based on a variance of a plurality of loss functions received in the first time period, where the plurality of loss functions include the second loss function; and determine the type of the Kalman filtering based on the non-linearity degree of the channel in the first time period.

Optionally, a variance of the second loss function is greater than or equal to a first threshold, and the non-linearity degree of the channel in the first time period is strong non-linearity; or a variance of the second loss function is less than a first threshold, and the non-linearity degree of the channel in the first time period is weak non-linearity.

Optionally, the non-linearity degree of the channel in the first time period is strong non-linearity, and the type of the Kalman filtering is cubature Kalman filtering; or the non-linearity degree of the channel in the first time period is weak non-linearity, and the type of the Kalman filtering is extended Kalman filtering.

In a possible implementation, the apparatus 1000 may implement steps or procedures performed by the second communication apparatus corresponding to the foregoing embodiment of the method 300.

The transceiver unit 1010 is configured to receive second data through a channel, where the second data is obtained by transmitting, through the channel, first data sent by the first communication apparatus, the first data is an output result obtained by inputting first training data into the first machine learning model, the first machine learning model includes a control layer, and the control layer is at least one layer of the first machine learning model. The processing unit 1020 is configured to: input the second data into a second machine learning model, to obtain third data; and determine a first loss function based on the third data and the first training data, where the first loss function is used to update a parameter of a control layer of a machine learning model. The transceiver unit 1010 is further configured to send the first loss function to the first communication apparatus through a feedback channel, where the feedback channel is determined based on an observation error, and the first loss function is used to update a parameter of the control layer of the first machine learning model.

Optionally, the processing unit 1010 is further configured to update a parameter of the second machine learning model based on reverse gradient propagation and according to the first loss function, to obtain the updated second machine learning model.

Optionally, the transceiver unit 1010 is further configured to receive fifth data through a channel, where the fifth data is obtained by transmitting, through the channel, fourth data sent by the first communication apparatus, and the fourth data is an output result obtained by inputting second training data into the first machine learning model. The processing unit 1020 is configured to: input the fifth data into the second machine learning model, to obtain sixth data; and determine a third loss function based on the sixth data and the second training data. The transceiver unit is further configured to: if the third loss function is less than a preset threshold, send indication information to the first communication apparatus, where the indication information indicates the first communication apparatus to stop training of the first machine learning model.

The apparatus 1000 herein is embodied in a form of the functional units. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1000 may be specifically the first communication apparatus or the second communication apparatus in the foregoing embodiments, or a function of the first communication apparatus or the second communication apparatus in the foregoing embodiments may be integrated into the apparatus. The apparatus may be configured to perform procedures and/or steps corresponding to the first communication apparatus or the second communication apparatus in the foregoing method embodiments. To avoid repetition, details are not described herein again.

The apparatus 1000 has a function of implementing a corresponding step performed by the first communication apparatus or the second communication apparatus in the foregoing embodiments. The foregoing function may be implemented by hardware, or may be implemented by hardware executing corresponding software. The hardware or the software includes one or more modules corresponding to the function. For example, the transceiver unit 1020 may include a sending unit and a receiving unit. The sending unit may be configured to implement steps and/or procedures that correspond to the transceiver unit and that are used to perform a sending action, and the receiving unit may be configured to implement steps and/or procedures that correspond to the transceiver unit and that are used to perform a receiving action. The sending unit may be replaced with a transmitter, and the receiving unit may be replaced with a receiver, to separately perform receiving and sending operations and related processing operations in the method embodiments. For another example, the transceiver unit 1020 may be replaced with a communication interface, to perform a transceiver operation in the method embodiments. In this embodiment of this application, the communication interface may be an apparatus that can implement a communication function, for example, a circuit, a module, a bus, a bus interface, or a transceiver. It should be understood that the processing unit 1010 in the foregoing embodiments may be implemented by a processor or a processor-related circuit, and the transceiver unit 1020 may be implemented by a transceiver, a transceiver-related circuit, or an interface circuit.

Optionally, the apparatus in the foregoing possible design may further include a storage unit. The storage unit is configured to store a computer program. The processing unit 1010 may invoke the computer program from the storage unit and run the computer program, so that the apparatus 1000 performs a method of the first communication apparatus or the second communication apparatus in the foregoing method embodiments. This is not limited in this embodiment of this application.

In addition, the units in the foregoing embodiments may also be referred to as modules, circuits, or components. In this embodiment of this application, the apparatus in FIG. 10 may alternatively be a chip or a chip system, for example, a system on chip (system on chip, SoC). Correspondingly, the transceiver unit may be a transceiver circuit of the chip. This is not limited herein.

FIG. 11 is a schematic block diagram of another model training related apparatus 1100 according to an embodiment of this application. The apparatus 1100 includes a processor 1110 and a transceiver 1120. The processor 1110 and the transceiver 1120 communicate with each other through an internal connection path, and the processor 1110 is configured to execute instructions, to control the transceiver 1120 to send a signal and/or receive a signal.

Optionally, the apparatus 1100 may further include a memory 1130. The memory 1130 communicates with the processor 1110 and the transceiver 1120 through internal connection paths. The memory 1130 is configured to store instructions, and the processor 1110 may execute the instructions stored in the memory 1130. The apparatus 1100 is configured to implement procedures and steps corresponding to the first communication apparatus or the second communication apparatus in the foregoing method embodiments.

The apparatus 1100 may be specifically the first communication apparatus or the second communication apparatus in the foregoing embodiments, or may be a chip or a chip system. Correspondingly, the transceiver 1120 may be a transceiver circuit of the chip. This is not limited herein. Specifically, the apparatus 1100 may be configured to perform the steps and/or procedures corresponding to the first communication apparatus or the second communication apparatus in the foregoing method embodiments. Optionally, the memory 1130 may include a read-only memory and a random access memory, and provide the instructions and data to the processor. A part of the memory may further include a nonvolatile random access memory. For example, the memory may further store information about a device type. The processor 1110 may be configured to execute the instructions stored in the memory, and when the processor 1110 executes the instructions stored in the memory, the processor 1110 is configured to perform the steps and/or procedures corresponding to the first communication apparatus or the second communication apparatus in the method embodiments.

In an implementation process, steps in the foregoing methods can be implemented by using a hardware integrated logical circuit in the processor, or by using instructions in a form of software. The steps of the methods disclosed with reference to embodiments of this application may be directly performed by a hardware processor, or may be performed by using a combination of hardware and software modules in the processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, the steps in the foregoing method embodiments can be implemented by using a hardware integrated logical circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. Steps of the methods disclosed with reference to embodiments of this application may be directly executed and completed by a hardware decoding processor, or may be executed and completed by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that a memory of a system and method described in this specification is intended to include but is not limited to these and any memory of another proper type.

According to the methods provided in embodiments of this application, this application further provides a computer program product. The computer program product includes computer program code. When the computer program code is run on a computer, the computer is enabled to perform a method shown in the foregoing embodiments.

According to the methods provided in embodiments of this application, this application further provides a computer-readable storage medium. The computer-readable storage medium stores program code. When the program code is run on a computer, the computer is enabled to perform a method in the foregoing embodiments.

According to the methods provided in embodiments of this application, this application further provides a chip. The chip includes a processor, configured to read instructions stored in a memory. When the processor executes the instructions, the chip is enabled to implement a method shown in the foregoing embodiments.

According to the methods provided in embodiments of this application, this application provides a computer program. When the computer program is run on a computer, a method in the possible implementation of the foregoing method embodiments is performed.

This application further provides a communication system, including the first communication apparatus and the second communication apparatus in the foregoing embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that a disclosed system, apparatus, and method may be implemented in other manners. For example, an apparatus embodiment described above is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electronic, a mechanical, or another form.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of the embodiments.

In addition, functional units in embodiments of this application may be integrated into one processing unit, each of the units may exist alone physically, or two or more units are integrated into one unit.

When functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device or the like) to perform all or some of steps of a method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A model training method, applied to a communication system comprising a first communication apparatus and a second communication apparatus, wherein there is at least one first communication apparatus, a first machine learning model is deployed in the first communication apparatus, and the method comprises:

   sending, by the first communication apparatus, first data to the second communication apparatus through a channel, wherein the first data is an output result obtained by inputting first training data into the first machine learning model, the first machine learning model comprises a control layer, and the control layer is at least one layer of the first machine learning model;
   receiving, by the first communication apparatus, a second loss function through a feedback channel, wherein the feedback channel is determined based on an observation error, and the second loss function is obtained by transmitting, through the feedback channel, the first loss function sent by the second communication apparatus; and
   updating, by the first communication apparatus, a parameter of the control layer based on Kalman filtering and according to the second loss function, to obtain an updated parameter of the control layer, wherein the updated parameter of the control layer is used to update a parameter of the first machine learning model.

2. The method according to claim 1, wherein the updating a parameter of the control layer based on Kalman filtering, to obtain an updated parameter of the control layer comprises:

   obtaining, by the first communication apparatus, a Kalman gain based on a prior parameter of the control layer, the second loss function, and an error covariance of the second loss function; and

updating, by the first communication apparatus, the parameter of the control layer based on the Kalman gain, to obtain the updated parameter of the control layer.

3. The method according to claim 2, wherein the method further comprises:

updating, by the first communication apparatus, a parameter of a first network layer in the first machine learning model based on the updated parameter of the control layer and the Kalman gain, to obtain an updated parameter of the first network layer, wherein the first network layer comprises a network layer before the control layer; and obtaining, by the first communication apparatus, the updated first machine learning model based on the updated parameter of the control layer and the updated parameter of the first network layer.

4. The method according to claim 3, wherein after the obtaining the updated first machine learning model, the method further comprises:

sending, by the first communication apparatus, fourth data to the second communication apparatus through the channel, wherein the fourth data is an output result obtained by inputting second training data into the first machine learning model;

receiving, by the first communication apparatus, indication information from the second communication apparatus, wherein the indication information indicates the first communication apparatus to stop training of the first machine learning model; and

stopping, by the first communication apparatus, the training of the first machine learning model based on the indication information.

5. The method according to any one of claims 1 to 4, wherein the first data comprises N groups of data, wherein N is a positive integer, and a value of N is determined based on a type of the Kalman filtering and a dimension of the parameter of the control layer.

6. The method according to any one of claims 1 to 4, wherein the first data comprises M groups of data, wherein M is a positive integer, a value of M is determined by the first communication apparatus and another first communication apparatus according to a preset rule, and a sum of M and a quantity of pieces of data sent by the another first communication apparatus is determined based on a type of the Kalman filtering and a dimension of the parameter of the control layer.

7. The method according to claim 6, wherein the method further comprises:
sending, by the first communication apparatus, the updated parameter of the control layer to the another first communication apparatus in the communication system.

8. The method according to any one of claims 1 to 7, wherein after the first communication apparatus receives the second loss function through the channel, the method further comprises:

determining, by the first communication apparatus, a non-linearity degree of the channel in a first time period based on a variance of a plurality of loss functions received in the first time period, wherein the plurality of loss functions comprise the second loss function; and

determining, by the first communication apparatus, the type of the Kalman filtering based on the non-linearity degree of the channel in the first time period.

9. The method according to claim 8, wherein a variance of the second loss function is greater than or equal to a first threshold, and the non-linearity degree of the channel in the first time period is strong non-linearity; or a variance of the second loss function is less than a first threshold, and the non-linearity degree of the channel in the first time period is weak non-linearity.

10. The method according to claim 8 or 9, wherein the non-linearity degree of the channel in the first time period is strong non-linearity, and the type of the Kalman filtering is cubature Kalman filtering; or the non-linearity degree of the channel in the first time period is weak non-linearity, and the type of the Kalman filtering is extended Kalman filtering.

11. A model training method, applied to a communication system comprising a first communication apparatus and a second communication apparatus, wherein there is at least one first communication apparatus, a first machine learning model is deployed in the first communication apparatus, a second machine learning model is deployed in the second communication apparatus, and the method comprises:

receiving, by the second communication apparatus, second data through a channel, wherein the second data is obtained by transmitting, through the channel, first data sent by the first communication apparatus, the first data is an output result obtained by inputting first training data into the first machine learning model, the first machine learning model comprises a control layer, and the control layer is at least one layer of the first machine learning model;

inputting, by the second communication apparatus, the second data into the second machine learning model, to obtain third data;

determining, by the second communication apparatus, a first loss function based on the third data and the first training data; and

sending, by the second communication apparatus, the first loss function to the first communication apparatus through a feedback channel, wherein the feedback channel is determined based on an observation error, and the first loss function is used to update a parameter of the control layer of the first machine learning model.

12. The method according to claim 11, wherein the method further comprises:
updating, by the second communication apparatus, a parameter of the second machine learning model based on reverse gradient propagation and according to the first loss function, to obtain the updated second machine learning model.

13. The method according to claim 12, wherein the method further comprises:

receiving, by the second communication apparatus, fifth data through the channel, wherein the fifth data is obtained by transmitting, through the channel, fourth data sent by the first communication apparatus, and the fourth data is an output result obtained by inputting second training data into the first machine learning model;

inputting, by the second communication apparatus, the fifth data into the second machine learning model, to obtain sixth data;

determining, by the second communication apparatus, a third loss function based on the sixth data and the second training data; and

if the third loss function is less than a preset threshold, sending, by the second communication apparatus, indication information to the first communication apparatus, wherein the indication information indicates the first communication apparatus to stop training of the first machine learning model.

14. A model training related apparatus, comprising:

a transceiver unit, configured to send first data to a second communication apparatus through a channel, wherein the first data is an output result obtained by inputting first training data into the first machine learning model, the first machine learning model comprises a control layer, and the control layer is at least one layer of the first machine learning model, wherein

the transceiver unit is further configured to receive a second loss function through a feedback channel, wherein the feedback channel is determined based on an observation error, and the second loss function is obtained by transmitting, through the feedback channel, the first loss function sent by the second communication apparatus; and

a processing unit, configured to update a parameter of the control layer based on Kalman filtering and according to the second loss function, to obtain an updated parameter of the control layer, wherein the updated parameter of the control layer is used to update a parameter of the first machine learning model.

15. The apparatus according to claim 14, wherein the processing unit is further configured to:

update a parameter of a first network layer in the first machine learning model based on the updated parameter of the control layer and a Kalman gain, to obtain an updated parameter of the first network layer, wherein the parameter of the first network layer comprises a parameter of a network layer before the control layer, and the Kalman gain is obtained based on a prior parameter of the control layer, the second loss function, and an error covariance of the second loss function; and

obtain the updated first machine learning model based on the updated parameter of the control layer and the updated parameter of the first network layer.

16. The apparatus according to claim 15, wherein the transceiver unit is further configured to:

     send fourth data to the second communication apparatus through the channel, wherein the fourth data is an output result obtained by inputting second training data into the first machine learning model; and
     receive indication information from the second communication apparatus, wherein the indication information indicates to stop training of the first machine learning model; and
     the processing unit is further configured to:
     stop the training of the first machine learning model based on the indication information.

17. The apparatus according to any one of claims 14 to 16, wherein the first data comprises N groups of data, wherein N is a positive integer, and a value of N is determined based on a type of the Kalman filtering and a dimension of the parameter of the control layer.

18. The apparatus according to any one of claims 14 to 16, wherein the first data comprises M groups of data, wherein M is a positive integer, a value of M is determined by the apparatus and another first communication apparatus according to a preset rule, and a sum of M and a quantity of pieces of data sent by the another first communication apparatus is determined based on a type of the Kalman filtering and a dimension of the parameter of the control layer.

19. The apparatus according to claim 18, wherein the transceiver unit is further configured to:
     send the updated parameter of the control layer to the another first communication apparatus.

20. The apparatus according to any one of claims 14 to 19, wherein the transceiver unit is further configured to:

     determine a non-linearity degree of the channel in a first time period based on a variance of a plurality of loss functions received in the first time period, wherein the plurality of loss functions comprise the second loss function; and
     the processing unit is further configured to:
     determine the type of the Kalman filtering based on the non-linearity degree of the channel in the first time period.

21. The apparatus according to claim 20, wherein a variance of the second loss function is greater than or equal to a first threshold, and the non-linearity degree of the channel in the first time period is strong non-linearity; or
     a variance of the second loss function is less than a first threshold, and the non-linearity degree of the channel in the first time period is weak non-linearity.

22. The apparatus according to claim 19 or 21, wherein the non-linearity degree of the channel in the first time period is strong non-linearity, and the type of the Kalman filtering is cubature Kalman filtering; or
     the non-linearity degree of the channel in the first time period is weak non-linearity, and the type of the Kalman filtering is extended Kalman filtering.

23. A model training related apparatus, comprising:

     a transceiver unit, configured to receive second data through a channel, wherein the second data is obtained by transmitting, through the channel, first data sent by a first communication apparatus, the first data is an output result obtained by inputting first training data into a first machine learning model, the first machine learning model comprises a control layer, and the control layer is at least one layer of the first machine learning model; and
     a processing unit, configured to: input the second data into a second machine learning model, to obtain third data; and determine a first loss function based on the third data and the first training data, wherein
     the transceiver unit is further configured to send the first loss function to the first communication apparatus through a feedback channel, wherein the feedback channel is determined based on an observation error, and
     the first loss function is used to update a parameter of the control layer of the first machine learning model.

24. The apparatus according to claim 23, wherein the processing unit is further configured to:
     update a parameter of the second machine learning model based on reverse gradient propagation and according to the first loss function, to obtain the updated second machine learning model.

25. The apparatus according to claim 24, wherein the transceiver unit is further configured to:

     receive fifth data through the channel, wherein the fifth data is obtained by transmitting, through the channel, fourth data sent by the first communication apparatus, and the fourth data is an output result obtained by inputting second training data into the first machine learning model;

the processing unit is further configured to:

input the fifth data into the second machine learning model, to obtain sixth data; and
determine a third loss function based on the sixth data and the second training data; and
the transceiver unit is further configured to:
if the third loss function is less than a preset threshold, send indication information to the first communication apparatus, wherein the indication information indicates the first communication apparatus to stop training of the first machine learning model.

26. A communication apparatus, comprising a processor and a transceiver, wherein the transceiver is configured to communicate with another apparatus, the processor is coupled to a memory, the memory is configured to store a computer program, and when the processor invokes the computer program, the apparatus is enabled to perform the method according to any one of claims 1 to 10 or the method according to any one of claims 11 to 13.

27. A chip system, comprising a processor, configured to invoke and run a computer program in a memory, to enable a communication device in which the chip system is installed to perform the method according to any one of claims 1 to 10 or the method according to any one of claims 11 to 13.

28. A computer-readable storage medium, wherein the computer-readable storage medium stores a computer program, and when the computer program is run on a computer, the method according to any one of claims 1 to 10 or the method according to any one of claims 11 to 13 is performed.

29. A computer program product, wherein the computer program product comprises instructions, and when the instructions are executed, the method according to any one of claims 1 to 10 or the method according to any one of claims 11 to 13 is performed.

30. A computer program, wherein when the computer program is run on a computer, the method according to any one of claims 1 to 10 or the method according to any one of claims 11 to 13 is performed.

31. A communication system, comprising the model training related apparatus according to any one of claims 14 to 22 and the model training related apparatus according to any one of claims 23 to 25.

FIG. 1

u → | Encoding autoencoder | → x → Channel → y → | Decoding autoencoder | → u*

Transmitting end                    Receiving end

FIG. 2

300

| First communication apparatus | Channel | Second communication apparatus | Feedback channel |

S301: First data →

S302: Second data →

S303: Input the second data into a second machine learning model, to obtain third data

S304: Determine a first loss function based on the third data and first training data

S305: First loss function →

← S306: Second loss function

S307: Update a parameter of a control layer based on Kalman filtering and according to the second loss function, to obtain an updated parameter of the control layer

FIG. 3

FIG. 4

500

| First communication apparatus | | Channel | | Second communication apparatus | | Feedback channel |

S501: Sample a parameter of a control layer, to obtain a sampling point of the parameter of the control layer

S502: Input first training data into a first machine learning model, to obtain first data

—— S503: First data ——▶

—— S504: Second data ——▶

S505: Input the second data into a second machine learning model, to obtain third data

S506: Determine a first loss function by using the third data as a predicted value and the first training data as a real value

S507: Update a parameter of the second machine learning model based on reverse gradient propagation and according to the first loss function, to obtain the updated second machine learning model

S508: First loss function ——▶

S509: Second loss function

S510: Obtain a Kalman gain based on the second loss function, a prior parameter of the control layer, and an error covariance of the second loss function

S511: Update the parameter of the control layer based on the Kalman gain, to obtain an updated parameter of the control layer

S512: Update a parameter of a first network layer in the first machine learning model based on the updated parameter of the control layer and the Kalman gain, to obtain an updated parameter of the first network layer

S513: Obtain the updated first machine learning model based on the updated parameter of the control layer and the updated parameter of the first network layer

FIG. 5

Control
layer

$l_{z\text{-}t\text{-}1}$        $l_{z\text{-}t} = \Theta_{z\text{-}t} l_{z\text{-}t\text{-}1}$    $l_z = \Theta_t l_{z\text{-}t}$

FIG. 6

Cross entropy loss

FIG. 7

FIG. 8

900

First communication apparatus 1 | First communication apparatus 2 | Channel | Second communication apparatus | Feedback channel

S901: Input first training data into a first machine learning model 1, to obtain first data 1, where the first machine learning model 1 includes a sampling point 1 of a parameter of a control layer

S902: Input the first training data into a first machine learning model 2, to obtain first data 2, where the first machine learning model 2 includes a sampling point 2 of the parameter of the control layer

S903: First data 1

S904: Second data 1

S905: First data 2

S906: Second data 2

S907: Obtain a first loss function based on the second data 1 and the second data 2

S908: First loss function

S909: Second loss function

S910: Obtain an updated parameter of the control layer according to the second loss function

S911: Updated parameter of the control layer

FIG. 9

Apparatus
1000

Processing unit
1010

Transceiver unit
1020

FIG. 10

Apparatus
1100

Processor
1110

Memory
1130

Transceiver
1120

FIG. 11

## INTERNATIONAL SEARCH REPORT

| International application No. |
|---|
| **PCT/CN2022/103985** |

**A. CLASSIFICATION OF SUBJECT MATTER**

H04L 1/00(2006.01)i; G06N 3/08(2006.01)i; G06N 3/04(2006.01)i; H04W 24/08(2009.01)i

According to International Patent Classification (IPC) or to both national classification and IPC

**B. FIELDS SEARCHED**

Minimum documentation searched (classification system followed by classification symbols)

H04L; G06N; H04W

Documentation searched other than minimum documentation to the extent that such documents are included in the fields searched

Electronic data base consulted during the international search (name of data base and, where practicable, search terms used)

USTXT; EPTXT; WOTXT; CNTXT; CNABS; VEN; CNKI; IEEE: 译码, 解码, 编码, 编码器, 自编码器, 自动编码器, 损失函数, 误差函数, 卡尔曼滤波, 训练, 更新, 神经网络, 机器学习模型, 信道, encode?, decode?, train+, update, neural network, machine learning model, channel, loss function

**C. DOCUMENTS CONSIDERED TO BE RELEVANT**

| Category* | Citation of document, with indication, where appropriate, of the relevant passages | Relevant to claim No. |
|---|---|---|
| X | CN 111434049 A (VIRGINIA TECH INTELLECTUAL PROPERTIES, INC.) 17 July 2020 (2020-07-17)<br>description, paragraphs [0131]-[0139], [0146]-[0156], and [0183]-[0185], and figures 5 and 7 | 1-3, 5, 6, 11, 12, 14, 15, 17, 18, 23, 24, 26-31 |
| X | CN 111327367 A (NOKIA SHANGHAI BELL CO., LTD. et al.) 23 June 2020 (2020-06-23)<br>description, paragraphs [0047]-[0059], and figure 3 | 1-7, 11-19, 23-31 |
| X | US 2018308013 A1 (VIRGINIA TECH INTELLECTUAL PROPERTIES INC.) 25 October 2018 (2018-10-25)<br>description, paragraphs [0062]-[0067], and figure 4 | 1-3, 5-7, 11, 12, 14, 15, 17-19, 23, 24, 26-31 |
| Y | CN 111434049 A (VIRGINIA TECH INTELLECTUAL PROPERTIES, INC.) 17 July 2020 (2020-07-17)<br>description, paragraphs [0131]-[0139], [0146]-[0156], and [0183]-[0185], and figures 5 and 7 | 4-7, 13, 16-19, 25-31 |
| Y | CN 111224677 A (HUAWEI TECHNOLOGIES CO., LTD.) 02 June 2020 (2020-06-02)<br>description, paragraphs [0258]-[0265], and figure 21 | 4-7, 13, 16-19, 25-31 |

☑ Further documents are listed in the continuation of Box C.     ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **12 August 2022** | **09 September 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/103985**

**C.    DOCUMENTS CONSIDERED TO BE RELEVANT**

| Category* | Citation of document, with indication, where appropriate, of the relevant passages | Relevant to claim No. |
|---|---|---|
| A | CN 110474716 A (ANHUI UNIVERSITY) 19 November 2019 (2019-11-19)<br>entire document | 1-31 |
| A | US 2019392302 A1 (DISNEY ENTERPRISES, INC.) 26 December 2019 (2019-12-26)<br>entire document | 1-31 |

Form PCT/ISA/210 (second sheet) (January 2015)

**INTERNATIONAL SEARCH REPORT**
Information on patent family members

International application No.

**PCT/CN2022/103985**

| Patent document cited in search report | | | Publication date (day/month/year) | Patent family member(s) | | | Publication date (day/month/year) |
|---|---|---|---|---|---|---|---|
| CN | 111434049 | A | 17 July 2020 | US | 2018367192 | A1 | 20 December 2018 |
| | | | | CN | 113283571 | A | 20 August 2021 |
| | | | | EP | 3642970 | A1 | 29 April 2020 |
| | | | | KR | 20200011551 | A | 03 February 2020 |
| | | | | KR | 20210133290 | A | 05 November 2021 |
| | | | | KR | 20200126433 | A | 06 November 2020 |
| | | | | WO | 2018236932 | A1 | 27 December 2018 |
| | | | | KR | 102310001 | B1 | 08 October 2021 |
| | | | | US | 10305553 | B2 | 28 May 2019 |
| | | | | KR | 102174659 | B1 | 05 November 2020 |
| | | | | EP | 3642970 | A4 | 31 March 2021 |
| | | | | CN | 111434049 | B | 11 June 2021 |
| CN | 111327367 | A | 23 June 2020 | EP | 3667953 | A1 | 17 June 2020 |
| | | | | CN | 111327367 | B | 18 January 2022 |
| | | | | US | 2020195353 | A1 | 18 June 2020 |
| | | | | US | 11063670 | B2 | 13 July 2021 |
| US | 2018308013 | A1 | 25 October 2018 | EP | 3616198 | A1 | 04 March 2020 |
| | | | | WO | 2018200529 | A1 | 01 November 2018 |
| | | | | EP | 3616198 | A4 | 06 January 2021 |
| | | | | US | 10643153 | B2 | 05 May 2020 |
| CN | 111224677 | A | 02 June 2020 | US | 2021279584 | A1 | 09 September 2021 |
| | | | | EP | 3879709 | A1 | 15 September 2021 |
| | | | | WO | 2020108472 | A1 | 04 June 2020 |
| | | | | VN | 80533 | A | 27 September 2021 |
| | | | | CN | 111224677 | B | 15 October 2021 |
| | | | | IN | 202117023353 | A | 05 November 2021 |
| | | | | EP | 3879709 | A4 | 22 December 2021 |
| CN | 110474716 | A | 19 November 2019 | CN | 110474716 | B | 14 September 2021 |
| US | 2019392302 | A1 | 26 December 2019 | US | 11205121 | B2 | 21 December 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110780949